# EUROPEAN PATENT APPLICATION

(11) **EP 4 791 102 A1**
(43) Date of publication of application: **12.08.2026**
(21) Application number: 23954790.4
(22) Date of filing: 05.10.2023
(51) Int. Cl.: H04W 72/232

(54) **TERMINAL, WIRELESS COMMUNICATION METHOD, AND BASE STATION**

(71) Applicant: NTT DOCOMO, INC., Tokyo 100-6150 (JP)
(72) Inventor: ECHIGO, Haruhi, Tokyo 100-6150 (JP); NAGATA, Satoshi, Tokyo 100-6150 (JP); MATSUMURA, Yuki, Tokyo 100-6150 (JP); OKAMURA, Masaya, Tokyo 100-6150 (JP); SHIMA, Kousuke, Tokyo 100-6150 (JP)
(74) Representative: Hoffmann Eitle
(86) International application number: PCT/JP2023/036395
(87) International publication number: WO 2025/074579

(57) **Abstract**

A terminal according to one aspect of the present disclosure includes a receiving section that receives sequence-based first downlink control information (DCI) not using a demodulation reference signal (DMRS), and a control section that controls reception of second DCI using the DMRS, based on the first DCI. According to one aspect of the present disclosure, resource efficiency can be enhanced.

## Description

### Technical Field

The present disclosure relates to a terminal, a radio communication method, and a base station in next-generation mobile communication systems.

### Background Art

In a Universal Mobile Telecommunications System (UMTS) network, the specifications of Long-Term Evolution (LTE) have been drafted for the purpose of further increasing high speed data rates, providing lower latency and so on (see Non-Patent Literature 1). In addition, for the purpose of further high capacity, advancement and the like of the LTE (Third Generation Partnership Project (3GPP (registered trademark)) Release (Rel.) 8 and Rel. 9), the specifications of LTE-Advanced (3GPP Rel. 10 to Rel. 14) have been drafted.

Successor systems of LTE (for example, also referred to as "5th generation mobile communication system (5G)," "5G+ (plus)," "6th generation mobile communication system (6G)," "New Radio (NR)," "3GPP Rel. 15 (or later versions)," and so on) are also under study.

### Citation List

### Non-Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)," April, 2010

### Summary of Invention

### Technical Problem

In future radio communication systems (for example, NR), for example, from the viewpoint of enhancement in resource efficiency, the use of a sequence-based transmission scheme not using a demodulation reference signal (DMRS) in a specific channel (for example, a physical downlink control channel (PDCCH)/physical downlink shared channel (PDSCH)/physical uplink shared channel (PUSCH)) is under study.

However, a specific method therefor is not sufficiently studied. Unless the study is sufficiently carried out, enhancement in resource efficiency may be hindered, and an increase in communication throughput may be reduced.

In view of this, the present disclosure has one object to provide a terminal, a radio communication method, and a base station that can enhance resource efficiency.

### Solution to Problem

A terminal according to one aspect of the present disclosure includes a receiving section that receives sequence-based first downlink control information (DCI) not using a demodulation reference signal (DMRS), and a control section that controls reception of second DCI using the DMRS, based on the first DCI. Advantageous Effects of Invention

According to one aspect of the present disclosure, resource efficiency can be enhanced.

### Brief Description of Drawings

[FIG. 1] FIG. 1 is a diagram to show an example of DCI (DMRS-based DCI) in an existing specification.
[FIG. 2] FIG. 2 is a diagram to show an example of sequence-based DCI.
[FIG. 3] FIG. 3 is a diagram to show another example of sequence-based DCI.
[FIG. 4] FIG. 4 is a diagram to show another example of sequence-based DCI.
[FIG. 5] FIG. 5 is a diagram to show an example of resources of sequence-based DCI and resources of DMRS-based DCI.
[FIG. 6] FIG. 6 is a diagram to show an example of a plurality of PDCCH candidates/DCI candidates monitored by a UE.
[FIG. 7] FIG. 7 is a diagram to show an example of a case in which different pieces of information are transmitted on a plurality of PDCCH candidates/DCI candidates on a sequence basis.
[FIG. 8] FIG. 8A/FIG. 8B is a diagram to show an example of narrowing down PDCCH candidates/DCI candidates by sequence-based DCI.
[FIG. 9] FIG. 9 is a diagram to show an example of association between pieces of information of a sequence-based PDCCH and phase rotation amounts.
[FIG. 10] FIG. 10A/FIG. 10B/FIG. 10C/FIG. 10D is a diagram to show an example of sequence-based PDCCH transmit signal generation processing.
[FIG. 11] FIG. 11 is a diagram to show an example of a schematic structure of a radio communication system according to one embodiment.
[FIG. 12] FIG. 12 is a diagram to show an example of a structure of a base station according to one embodiment.
[FIG. 13] FIG. 13 is a diagram to show an example of a structure of a user terminal according to one embodiment.
[FIG. 14] FIG. 14 is a diagram to show an example of a hardware structure of the base station and the user terminal according to one embodiment.
[FIG. 15] FIG. 15 is a diagram to show an example of a vehicle according to one embodiment.

### Description of Embodiments

### (Sequence-Based PUCCH)

In existing radio communication systems (for example, in Rel. 15 to Rel. 17), as transmission schemes for a physical uplink control channel (PUCCH), a DMRS-based PUCCH (DMRS-based transmission) for transmitting a UL signal in which a demodulation reference signal (DMRS) and uplink control information (UCI) are time-division multiplexed (TDM)/frequency-division multiplexed (FDM) to perform notification of the UCI and a sequence-based PUCCH (sequence-based transmission) for transmitting a UL signal using code resources associated with a value of UCI without using a DMRS to perform notification of the UCI are defined.

For example, the former is PUCCH format 1/2/3/4, and the latter is PUCCH format 0.

On the sequence-based PUCCH, a UL signal using code resources associated with a value of UCI is transmitted. The code resources are resources used for code division multiplexing (CDM), and may be at least one of a base sequence, a cyclic shift (CS), and an orthogonal cover code (OCC). The CS in the present disclosure may be interpreted as other code resources such as phase rotation and an OCC.

The base sequence may be a CAZAC (Constant Amplitude Zero Auto-Correlation) sequence (for example, a Zadoff-chu sequence), or may be a sequence (CG-CAZAC (computer generated CAZAC) sequence) conforming to the CAZAC sequence.

Information related to the code resources (a code resource candidate set, for example, a CS candidate set) may be notified from a base station to a terminal (a user terminal, a User Equipment (UE)) by higher layer signaling, physical layer signaling (for example, downlink control information (DCI)), or a combination of these.

As compared to the DMRS-based PUCCH, the sequence-based PUCCH has a low ratio of resources of the DMRS to resources of the PUCCH, and can thus enhance resource efficiency in PUCCH transmission.

### (Minimum Quality Guarantee in Future Radio Communication Systems)

In existing radio communication systems (for example, in Rel. 15 to Rel. 17), so-called best-effort communication is generally used as mobile communication that uses a public network.

Such communication has a characteristic in that a communication operator cannot control an instantaneous increase in traffic volume. For example, there is a problem in that minimum communication is not ensured (for example, a phone call cannot be placed, the web cannot be browsed, or the like) when traffic instantaneously/explosively increases in a dense environment such as a concert/stadium.

In the existing radio communication systems (for example, in Rel. 15 to Rel. 17), mission-critical use cases (for example, Ultra-Reliable and Low Latency Communications (URLLC)) are under study.

However, it is considered that desired communication quality (for example, throughput/delay/the number of simultaneous connections, or the like) cannot be achieved when a mission-critical communication service is performed in a public network, surrounding traffic increases as described above, or traffic in the mission-critical communication service increases.

Thus, in future radio communication systems, a mechanism is required in which minimum communication quality can be ensured, whether for general users or for mission-critical use cases.

However, it is difficult to guarantee minimum quality with finite resources.

For example, provided that the number of temporary users is an unknown number, it is difficult to guarantee minimum quality for all the users by using finite resources.

Since the minimum quality that can be ensured differs depending on performance/type of a device/UE, it is difficult to guarantee minimum quality with which KPIs (Key Performance Indicators) of services required by any user can be achieved.

Since the radio communication quality varies from moment to moment due to various factors, it is difficult to constantly ensure specific performance KPIs (for example, throughput/reliability).

It is difficult to ensure specific quality at any location due to limitations on the number of base stations/transmission/reception points that can be deployed or factors such as a surrounding communication environment.

Here, as a method for guaranteeing minimum quality for a large number of UEs, an efficient communication scheme for low data rate/low payload is under study.

As a more specific method, a technology/method for performing communication with low data rate/low payload, a technology/method for improving spectral efficiency of resources (for example, spatial multiplexing of channels/signals, sequence-based transmission), or the like even when the number of resources that can be allocated to one UE is small is under study.

However, in the existing radio communication systems, communication with low data rate/low payload cannot always be implemented.

Specifically, a sequence-based transmission scheme in a specific channel (for example, a physical downlink control channel (PDCCH)/physical downlink shared channel (PDSCH)) is not sufficiently studied, and thus when the number of symbols of the specific channel is small, the ratio of resources of the DMRS to resources of the specific channel increases. In this case, resource efficiency may decrease.

In view of this, the inventors of the present invention defined a sequence-based transmission scheme for a specific channel, and thereby came up with the idea of a method for performing sufficient communication even when the number of resources that can be allocated to one UE is small.

Embodiments according to the present disclosure will be described in detail with reference to the drawings as follows. The radio communication methods according to respective embodiments may each be employed individually, or may be employed in combination.

In the present disclosure, "A/B" and "at least one of A and B" may be interchangeably interpreted. In the present disclosure, "A/B/C" may mean "at least one of A, B, and C."

In the present disclosure, notify, activate, deactivate, indicate, select, configure, update, determine, and the like may be interchangeably interpreted. In the present disclosure, "support," "control," "controllable," "operate," "operable," and the like may be interchangeably interpreted.

In the present disclosure, radio resource control (RRC), an RRC parameter, an RRC message, a higher layer parameter, a field, an information element (IE), a configuration, and the like may be interchangeably interpreted. In the present disclosure, a Medium Access Control control element (MAC Control Element (CE)), an update command, an activation/deactivation command, and the like may be interchangeably interpreted.

In the present disclosure, the higher layer signaling may be, for example, any one or combinations of Radio Resource Control (RRC) signaling, Medium Access Control (MAC) signaling, broadcast information, other messages (for example, a message from the core network, such as positioning protocol (for example, NR Positioning Protocol A (NRPPa)/LTE Positioning Protocol (LPP)) messages), and the like.

In the present disclosure, the MAC signaling may use, for example, a MAC control element (MAC CE), a MAC Protocol Data Unit (PDU), or the like. The broadcast information may be, for example, a master information block (MIB), a system information block (SIB), minimum system information (Remaining Minimum System Information (RMSI)), other system information (OSI), or the like.

In the present disclosure, the physical layer signaling may be, for example, downlink control information (DCI), uplink control information (UCI), or the like.

In the present disclosure, a sequence basis, sequence-based transmission, sequence-based DL transmission, sequence-based DL data, sequence-based DCI, a sequence-based PDCCH, a PDCCH associated with a sequence basis, and the like may be interchangeably interpreted.

In the present disclosure, DCI in an existing specification, DMRS-based DCI, existing DCI, a DMRS basis, a PDCCH of an existing specification, DCI modulated using a specific modulation scheme, a PDCCH associated with DCI modulated using a specific modulation scheme, a PDCCH including a DMRS, a DMRS-based PDCCH, and the like may be interchangeably interpreted.

### (Radio Communication Method)

### <Application Conditions in Sequence-Based DL Data>

DL data (DL information bits) to which sequence-based transmission is applied and features/application conditions of the sequence-based transmission will be described.

### {DL Information Bits}

Sequence-based DL information bits may be DCI, or may be a part of DCI.

### {Channel Type}

A channel of sequence-based DL data may be a PDCCH, may be a PDSCH, may be a PBCH, or may be another DL channel.

### {Type of Receiving Terminal}

The DL information bits may be receivable only by a UE having specific UE capability information (UE capability) or a UE for which minimum quality is to be guaranteed. The specific UE capability information may indicate support of sequence-based DL data, or may indicate support of minimum quality guarantee operation.

### {Applicable DCI}

The UE may receive information on a sequence basis for a specific DCI format, or may receive information on a sequence basis for a DCI format having a cyclic redundancy check (CRC) scrambled with a specific RNTI. In other words, sequence-based transmission may be applied to a specific DCI format/DCI format having a CRC scrambled with a specific RNTI. The specific DCI format and the specific RNTI may be determined based on a parameter configured for the UE, or may be defined in advance.

### {UE State}

The sequence-based DL data may be supported only in a specific UE state, or may be supported in all the UE states. The specific UE state may be one or more of RRC idle, RRC inactive, another UE state that is not an RRC connected state, and the RRC connected state, for example.

### {Type of DL Data}

The sequence-based DL data may be at least one of an indication of ON/OFF of transmission/reception of a specific signal, an indication of a transmission/measurement timing, an indication of resources, information related to a capability/state of the UE, and transmission confirmation information (for example, which may be referred to as a Hybrid Automatic Repeat reQuest ACKnowledgement (HARQ-ACK), an ACK/NACK, or the like), or may be other information. For example, at least a part of information provided in a part of DCI fields of any DCI format in existing specifications may be received/notified on a sequence basis (selection of a sequence).

### {Waveform}

A waveform of the sequence-based DL data may be at least one of orthogonal frequency division multiplex (OFDM), discrete Fourier transform (DFT)-spread (s)-orthogonal frequency division multiplex (OFDM), and pre-chirp, or may be another waveform.

### {Others}

The sequence-based DL data may be applicable only when a DCI payload (information bits) or a coding rate is equal to or less than/equal to or more than a certain value.

The information related to the features/application conditions of the sequence-based transmission described above (for example, which feature is included, which application condition is used, the specific DCI format/specific RNTI, the specific UE state, the certain value, and the like) may be notified to the UE by using RRC/MAC CE.

### <Configuration of Sequence-Based DL Data>

The sequence-based DL data may be received by/notified to the UE according to at least one of the following (1) to (3).
(1) At least a part of information not provided in a part of DCI fields of any DCI format of existing specifications is received/notified by using sequence-based transmission.
(2) At least a part of a part of resource information (for example, an aggregation level/DCI format/control channel element (CCE) index, or the like) of any DCI format/search space set (SS)/CORESET/PDCCH of existing specifications is received/notified by using sequence-based transmission.
(3) At least a part of information provided by using a part of DCI fields of any DCI format of existing specifications is received/notified by using only sequence-based transmission.

The above (1) and (2) may be simultaneously applied. In this case, at least a part of information provided in a part of DCI fields of any DCI format of existing specifications and at least a part of a part of resource information of any DCI format/SS/CORESET/PDCCH of existing specifications may be received/notified on a sequence basis.

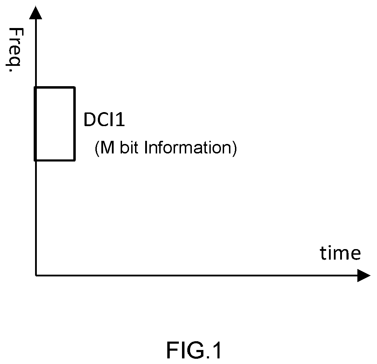

FIG. 1 is a diagram to show an example of reception of DCI (DMRS-based DCI) in an existing specification. On DCI1, M bit information may be notified to the UE.

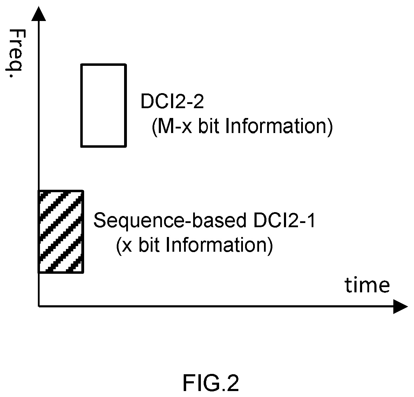

FIG. 2 is a diagram to show an example of the above (1). On sequence-based DCI2-1, x (x < M) bit information being at least a part of information provided on the DMRS-based DCI (M bit information provided on the DCI1 of FIG. 1) may be notified to the UE, and on DMRS-based DCI2-2, M-x bit information (information other than the information provided on the sequence-based DCI2-1 out of the M bit information provided on the DCI1 of FIG. 1) may be notified to the UE. Regarding the sequence-based DCI2-1, resources may be determined by higher layer signaling or the like, or may be blindly decoded by the UE. The DMRS-based DCI2-2 may be blindly decoded by the UE.

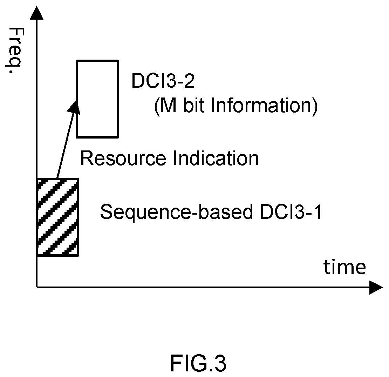

FIG. 3 is a diagram to show an example of the above (2). On sequence-based DCI3-1, information for specifying DMRS-based DCI3-2 (for example, information related to resources of the DMRS-based DCI3-2 (which may be the same as "information for narrowing down PDCCH candidates" to be described later)) may be notified to the UE, and on the DMRS-based DCI3-2, the M bit information may be notified to the UE. Regarding the sequence-based DCI3-1, resources may be determined by higher layer signaling or the like, or may be blindly decoded by the UE. While the DMRS-based DCI3-2 may be decoded based on the information of the sequence-based DCI3-1, it may not be blindly decoded.

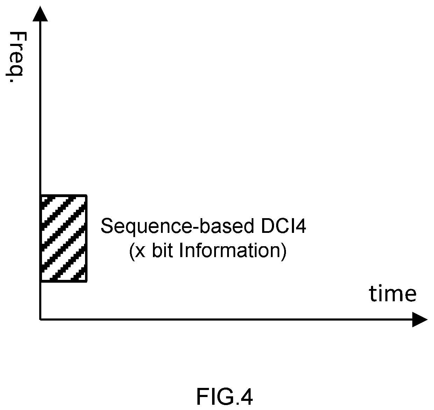

FIG. 4 is a diagram to show an example of the above (3). On sequence-based DCI4, x bit information being at least a part of information provided on the DMRS-based DCI (M bit information provided on the DCI1 of FIG. 1) may be notified to the UE.

Note that the sequence-based DCI2-1 and the sequence-based DCI3-1 may be received/notified on a DMRS basis, not on a sequence basis.

For the sequence-based DCI2-1, the DMRS-based DCI2-2, the sequence-based DCI3-1, and the sequence-based DCI4, new DCI formats may be defined. A DCI format for the DMRS-based DCI3-2 may be associated with the sequence-based DCI (sequence-based DCI3-1). The association may be defined in advance, or may be notified to the UE by RRC/MAC CE.

According to the above (1), a part of information of the DMRS-based DCI (for example, UL/DL assignment, a configuration of a payload/DCI field, and the like) can be notified to the UE on the sequence-based DCI in advance.

According to the above (2), the UE may try to detect the DMRS-based DCI only in resources indicated by the sequence-based DCI, and thus the number of PDCCH candidates/DCI candidates to be monitored can be reduced. In other words, the UE need not monitor (blindly decode) the PDCCH candidates for the DMRS-based DCI of a specific DCI format (for example, the DCI format for the DMRS-based DCI3-2 described above) in resources other than the resources indicated by the sequence-based DCI.

According to the above (3), resource efficiency can be further enhanced.

In a case of the above (1) and/or (2), the UE may assume that the following relationships/restrictions are present between a PDCCH associated with the sequence basis (which may be interpreted as DCIX-1, a PDCCH of DCIX-1, sequence-based DCI, a sequence-based PDCCH, or the like) and a PDCCH associated with DCI modulated using a specific modulation scheme (for example, Quadrature Phase Shift Keying (QPSK)) or a PDCCH including a DMRS (which may be interpreted as DCIX-2, a PDCCH of DCIX-2, DMRS-based DCI, a DMRS-based PDCCH, or the like).

### {Frequency Relationship between DCIX-1 and DCIX-2}

The UE may assume that the following (i) and/or (ii) is present between the DCIX-1 and the DCIX-2 as a frequency relationship (a restriction in a frequency direction, association of frequency resources).
(i) A CCE index of the DCIX-1 and a CCE index of the DCIX-2 are the same, or a difference between these CCE indices is within a certain number (Y).
(ii) A physical resource block (PRB) to which the DCIX-1 is allocated and a PRB to which the DCIX-2 is allocated are the same, or a difference between these PRBs is within a certain number (Y) of RBs.

### {Time Relationship between DCIX-1 and DCIX-2}

The UE may assume that the following (iii) and/or (iv) is present between the DCIX-1 and the DCIX-2 as a time relationship (a restriction in a time direction, association of time resources).
(iii) The first symbol of the DCIX-2 is allocated Z milliseconds (which may be interpreted as symbols, slots, or the like) after the last symbol of the DCIX-1.
(iv) The last symbol of the DCIX-2 is allocated within Z milliseconds (which may be interpreted as symbols, slots, or the like) from the first or last symbol of the DCIX-1.

The relationships/restrictions of the above (i) to (iv) may be combined. Note that the first/last symbol in the above (iii)/(iv) may be interpreted as any symbol (for example, the first, last, or i (i is an integer)-th symbol).

Note that the values of Y and Z in the above (i) to (iv) may be any values determined in advance, may be values based on UE capability information, or may be values based on a configured/indicated parameter (for example, a higher layer parameter or the like).

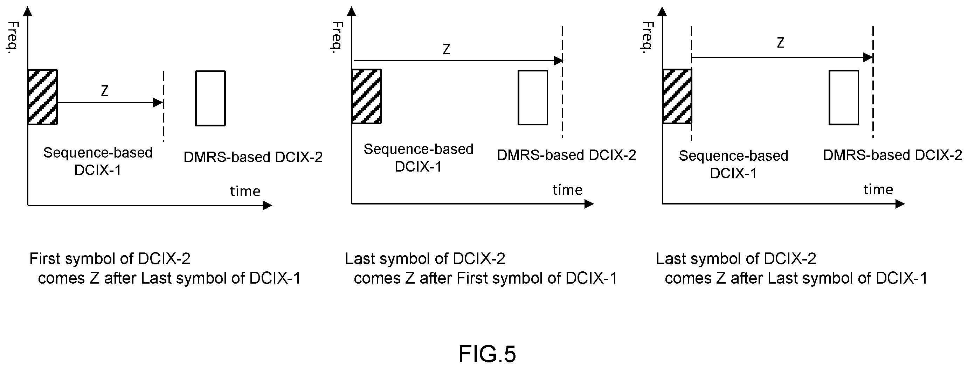

FIG. 5 is a diagram to show an example of the above (iii)/(iv). Note that, in FIG. 5, in the period (Z) from the first/last symbol of the DCIX-1 to the first/last symbol of the DCIX-2, a specific channel (for example, a PDSCH/PUSCH) need not be transmitted and received.

### <Reception Methods for Sequence-Based DL Data>

The UE may receive the sequence-based DL data while searching from the PDCCH candidates. In the present disclosure, a PDCCH candidate may be interchangeably interpreted as a DCI candidate.

Regarding the PDCCH candidates related to the sequence-based DL data, at least one of the following may be defined by a specification or may be notified to the UE by using RRC/MAC CE according to (or for each) RNTI/SS/CORESET/aggregation level.
- Periodicity/symbol/slot/time offset
- Sequence length/sequence format
- Start resource element (RE)/start resource block (RB)/start resource block group (RBG)/start subband/start symbol/start slot
- Number of REs/number of RBs/number of RBGs/number of subbands/number of symbols/number of slots
- Density for each RB/RBG/subband/symbol/slot
- Bitmap indication in units of REs/RBs/RBGs/subbands/symbols/slots

The UE may receive the sequence-based DL data by using at least one of the following reception method 1 to reception method 3.

### {Reception Method 1}

The UE may determine whether or not the PDCCH candidates can be received, depending on whether or not measurement values in the PDCCH candidates exceed a threshold.

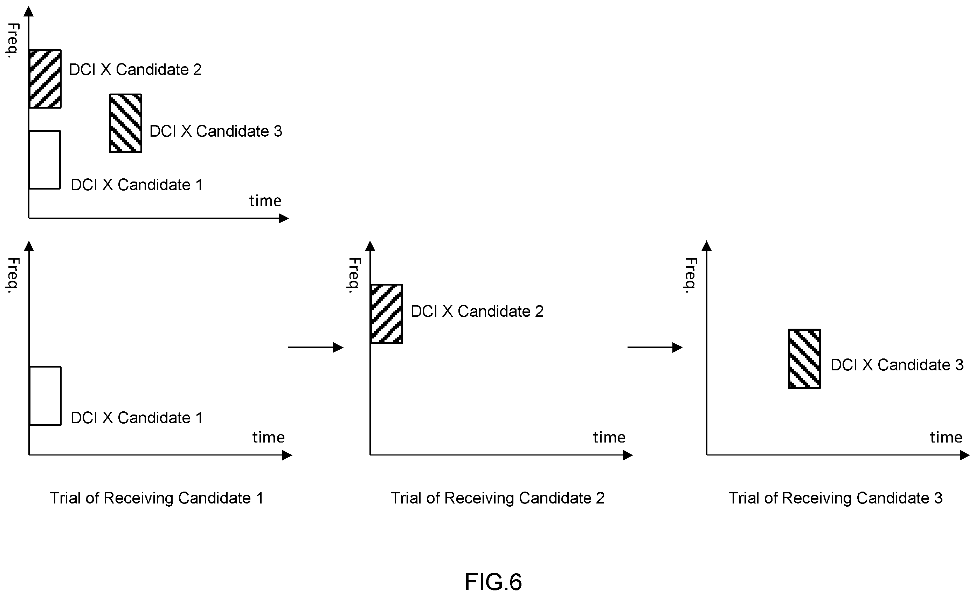

FIG. 6 is a diagram to show an example of a plurality of PDCCH candidates monitored by the UE. In the present example, the same sequence-based DCIX may be transmitted in three PDCCH candidates. In FIG. 6, the UE may try to receive the PDCCH candidates in order of DCI X candidate 1, DCI X candidate 2, and DCI X candidate 3. Note that the order of the trials of receiving the PDCCH candidates is not limited to this order. The UE may try to receive a plurality of PDCCH candidates simultaneously.

The number/maximum number/order of the trials of receiving the PDCCH candidates may be determined in advance, or may be determined based on a parameter notified by RRC/MAC CE.

For the measurement values, at least one of the following metrics may be determined in advance, or which metric is to be used may be notified to the UE by RRC/MAC CE.
- RSRP/RSRQ/SINR
- Autocorrelation/cross-correlation

The threshold may be determined in advance, or may be notified to the UE by using RRC/MAC CE.

### {Reception Method 2}

Different pieces of information may be included in a plurality of PDCCH candidates.

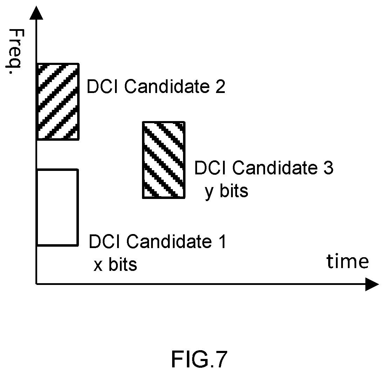

FIG. 7 is a diagram to show an example of a case in which different pieces of information are received/notified in a plurality of PDCCH candidates on a sequence basis. x bit information may be notified on DCI candidate 1, and y bit information may be notified on DCI candidate 3. The PDCCH candidate may be determined for each of detected information. Information as to which information is to be notified in which PDCCH candidate may be notified to the UE by RRC/MAC CE.

The PDCCH candidates may be a combination of a sequence-based PDCCH and a PDCCH of an existing specification, and at least one of an aggregation level, a CCE index, a symbol, a slot, an RNTI, and a DCI format may be notified to the UE as information for narrowing down the PDCCH candidates in the PDCCH of the existing specification by the sequence-based PDCCH.

Based on the information for narrowing down the PDCCH candidates, the PDCCH candidates (a set of PDCCH candidates corresponding to at least one of a certain aggregation level, CCE index, symbol, slot, RNTI, and DCI format) in the PDCCH of the existing specification to be monitored may be narrowed down/limited/specified to one or more candidates. Based on the information for narrowing down the PDCCH candidates, when the set is narrowed down/limited/specified to one candidate, the UE may try to receive only the one candidate without monitoring (blindly decoding) the PDCCH candidates other than the one candidate in the set. Based on the information for narrowing down the PDCCH candidates, when the set is narrowed down/limited/specified to a plurality of candidates, the UE may monitor (blindly decode) the plurality of candidates and need not monitor other candidates in the set.

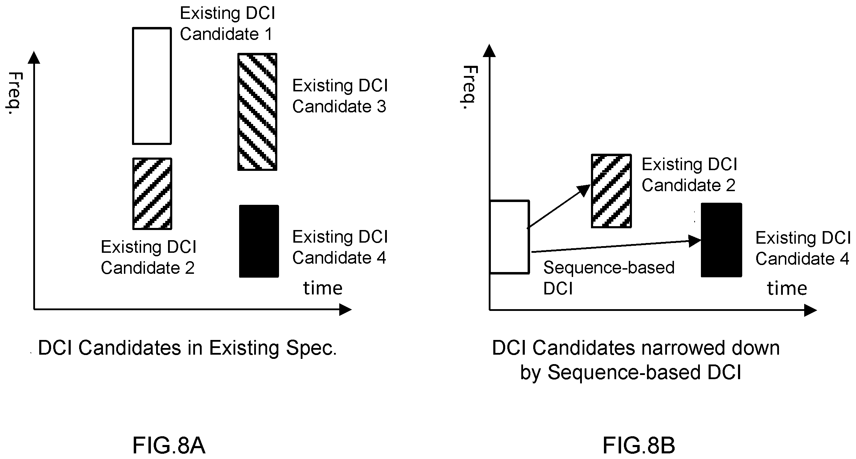

FIG. 8A and FIG. 8B are diagrams to show examples of narrowing down the DCI candidates. In FIG. 8A, the UE tries to receive the DCI candidates in order of existing DCI candidate 1, existing DCI candidate 2, existing DCI candidate 3, and existing DCI candidate 4. On the other hand, in FIG. 8B, the existing DCI candidates are narrowed down by the sequence-based DCI, and the UE tries to receive the DCI candidates in order of existing DCI candidate 2 and existing DCI candidate 4 without trying to receive existing DCI candidate 1 and existing DCI candidate 3.

The PDCCH candidates may be determined for each of the sequence-based DCI and the DCI modulated using a specific modulation scheme (for example, QPSK).

Based on specific DCI (for example, the sequence-based DCI), a PDCCH/PDCCH candidate/DCI format/detection-use RNTI for detecting different DCI (for example, the DCI modulated using QPSK) may be determined.

### {Reception Method 3}

In the sequence-based DL data, information related to resources/sequence may be notified to the UE in advance, and the UE may receive DCI in the resources in a notification/by assuming the sequence in the notification.

For the UE, at least one of the following may be defined by a specification or may be notified by RRC/MAC CE according to the DL information bits/RNTI/SS/CORESET/aggregation level of the PDCCH candidates/DCI candidates.
- RE/RB/RBG-level offset/symbol/slot/time offset
- Sequence length/sequence format
- Start RE/start RB/start RBG/start subband/start symbol/start slot
- Number of REs/number of RBs/number of RBGs/number of subbands/number of symbols/number of slots
- Density for each RB/RBG/subband/symbol/slot
- Bitmap indication in units of REs/RBs/RBGs/subbands/symbols/slots

### <Sequence Generation in Sequence-Based DL Data>

A sequence generation method in the sequence-based DL data may be defined. The base station may transmit the sequence-based PDCCH, based on base sequences. Specifically, the base station may generate a transmit signal of the sequence-based PDCCH via application of phase rotation/cyclic shift (CS) to the base sequences.

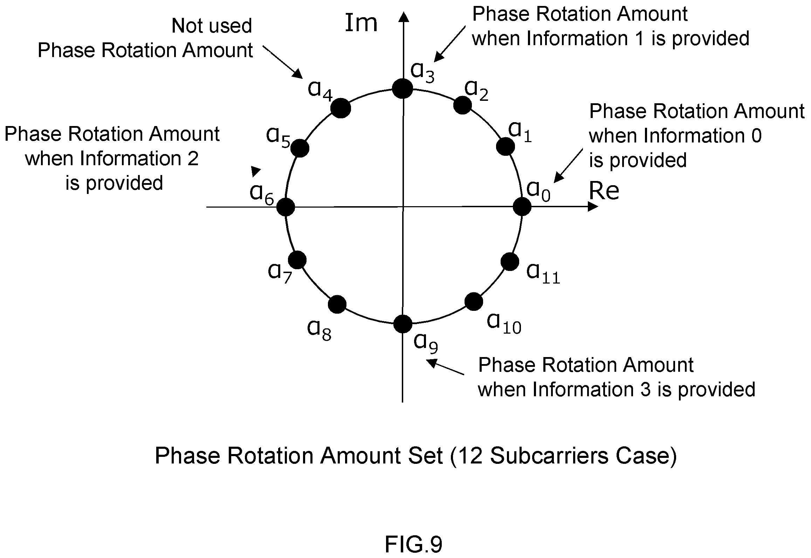

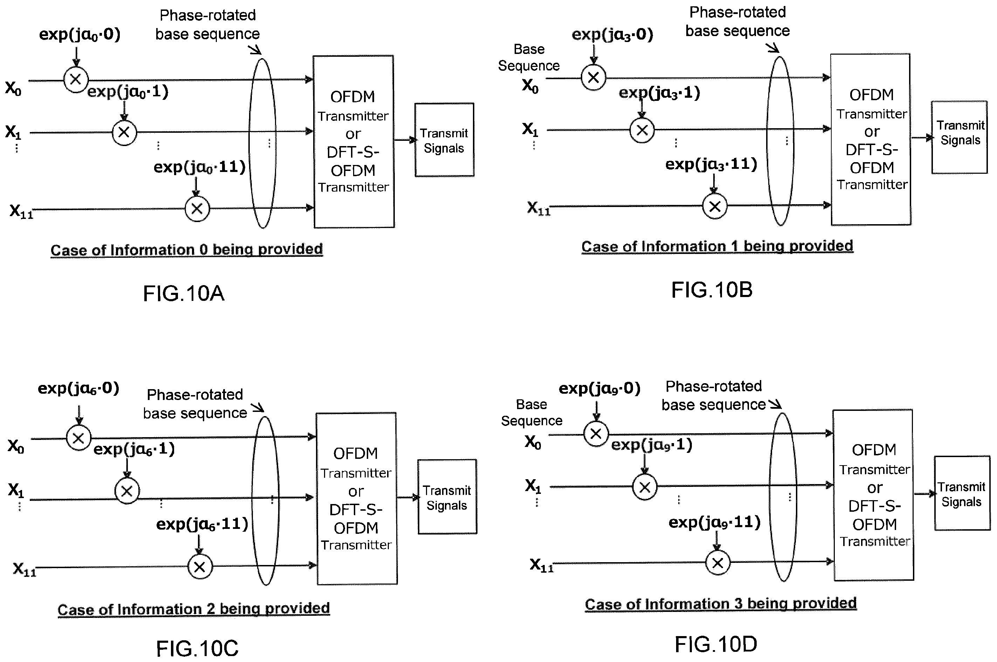

Information (DL data) of the sequence-based PDCCH may be notified via the CS (FIG. 9 and FIG. 10).

In sequence-based PDCCH transmit signal generation processing, base sequences X₀ to X_{M-1} having a sequence length M may be phase-rotated (cyclically shifted) using a selected phase rotation amount α, and the phase-rotated base sequences may be input to an OFDM (Orthogonal Frequency Division Multiplexing) transmitter or a DFT-S-OFDM (Discrete Fourier Transform-Spread-Orthogonal Frequency Division Multiplexing) transmitter. The base station may transmit an output signal from the OFDM transmitter or the DFT-S-OFDM transmitter.

FIG. 9 is a diagram to show an example of association between pieces of information of the sequence-based PDCCH and phase rotation amounts. In the sequence-based PDCCH, a plurality of phase rotation amount candidates for the base sequences may be assigned. For example, when a 2-bit sequence-based PDCCH is transmitted, four code resource candidates (for example, phase rotation amounts) may be assigned. In the present example, phase rotation amounts α₀, α₃, α₆, and α₉ are respectively associated with pieces of information 0 to 3 of the sequence-based PDCCH.

FIG. 10 is a diagram to show an example of sequence-based PDCCH transmit signal generation processing based on the association of FIG. 9. The sequence length of the base sequences is 12 in FIG. 10, and when the information 0 is notified as the sequence-based PDCCH, as shown in FIG. 10A, the base station phase-rotates the base sequences X₀ to X₁₁ by using the phase rotation amount α₀ associated with the information 0. Similarly, when the pieces of information 1 to 3 are notified as the sequence-based PDCCH, as shown in FIG. 10B, FIG. 10C, and FIG. 10D, respectively, the base station phase-rotates the base sequences X₀ to X₁₁ by using the phase rotation amounts α₃, α₆, and α₉ associated with the pieces of information 1 to 3.

Note that, in the present disclosure, the base station transmitting the sequence-based PDCCH based on a certain sequence (i.e., using the certain sequence for (generation of) the sequence-based PDCCH) may be interchangeably interpreted as the UE performing reception processing (decoding and the like) of the sequence-based PDCCH by assuming the sequence. In the present disclosure, the UE receiving/detecting the sequence-based PDCCH may be interchangeably interpreted as the base station transmitting the sequence-based PDCCH.

As the base sequences of the sequence-based PDCCH, one or more of a pseudo-random sequence, a Zadoff-chu (ZC) sequence, a Computer Generated (CG) sequence, and an M-sequence may be used. The pseudo-random sequence may be a sequence as described in existing 3GPP TS 38.211 §5.2.1. The ZC sequence may be a sequence as described in existing 3GPP TS 38.211 §5.2.2.1. The CG sequence may be a sequence as described in existing 3GPP TS 38.211 §5.2.2.2. The M-sequence may be a sequence as described in existing 3GPP TS 38.211 §7.4.2.2.1.

Different base sequences may be used based on specific conditions. For example, as the base sequences of the sequence-based PDCCH, when the specific conditions are satisfied, the base station may use first base sequences (including one or more of a pseudo-random sequence, a ZC sequence, a CG sequence, and an M-sequence, for example), otherwise use second base sequences (including one or more of a pseudo-random sequence, a ZC sequence, a CG sequence, and an M-sequence). The specific conditions may be determined in advance, or may be configured for the UE by RRC/MAC CE. Note that the first base sequences and the second base sequences may be different types of sequences (for example, a ZC sequence and an M-sequence), or may be the same type of sequences but sequences based on different parameters/indices/expressions.

The specific conditions may include a condition based on the sequence length. For example, when the sequence length is less than X, the base station may use the first base sequences (for example, CG sequences), and when the sequence length is equal to or larger than X, the base station may use the second base sequences (for example, ZC sequences).

The specific conditions may include a condition based on a payload size (transmission data length) of DCI. For example, when the payload size of the DCI is less than X, the base station may use the first base sequences (for example, CG sequences), and when the payload size of the DCI is equal to or larger than X, the base station may use the second base sequences (for example, ZC sequences).

The specific conditions may include a condition based on an SS/aggregation level/CORESET/DCI format/cell ID of DCI. For example, when the SS for receiving the DCI is a UE-specific search space set (USS), the base station may use the first base sequences (for example, CG sequences), and when the SS for receiving the DCI is a common search space set (CSS), the base station may use the second base sequences (for example, ZC sequences).

The specific conditions may include a condition based on an aggregation level of DCI. For example, when the aggregation level of the DCI is a first value (for example, 1), the base station may use the first base sequences (for example, CG sequences), and when the aggregation level of the DCI is a second value (for example, 8), the base station may use the second base sequences (for example, ZC sequences).

The specific conditions may include a condition based on a CORESET for receiving DCI. For example, when the CORESET for receiving the DCI is a first CORESET, the base station may use the first base sequences (for example, CG sequences), and when the CORESET for receiving the DCI is a second CORESET, the base station may use the second base sequences (for example, ZC sequences).

The specific conditions may include a condition based on a DCI format. For example, when the DCI is a first DCI format, the base station may use the first base sequences (for example, CG sequences), and when the DCI is a second DCI format, the base station may use the second base sequences (for example, ZC sequences).

The specific conditions may include a condition based on an RNTI for scrambling a CRC of DCI. For example, when the RNTI for scrambling the CRC of the DCI is a first RNTI (for example, a System Information RNTI (SI-RNTI)), the base station may use the first base sequences (for example, M-sequences), and when the RNTI for scrambling the CRC of the DCI is a second RNTI (for example, a Cell RNTI (C-RNTI)), the base station may use the second base sequences (for example, CG sequences).

The specific conditions may include a condition based on a cell ID. For example, when the base station transmits the DCI in a first cell, the base station may use the first base sequences (for example, CG sequences), and when the base station transmits the DCI in a second cell, the base station may use the second base sequences (for example, ZC sequences).

The specific conditions may include combinations of the conditions. For example, when the SS for receiving the DCI is the USS and the DCI format of the DCI is the first DCI format, the base station may use the first base sequences (for example, CG sequences), and when the SS for receiving the DCI is the CSS or the DCI format of the DCI is the second DCI format, the base station may use the second base sequences (for example, ZC sequences).

Note that "less than X" may be interpreted as "equal to or less than X". "Equal to or larger than X" may be interpreted as "larger than X".

### <Associations of Sequence-Based DL Data>

In the sequence-based DL data, associations between parameters and sequences may be defined.

According to the DCI/RNTI/SS/CORESET, the base sequences may be different, or a plurality of base sequences may be used.

The base sequences associated with the DCI/RNTI/SS/CORESET may be defined by a specification, or may be notified by RRC/MAC CE. According to the type of the RNTI/SS/DCI, the indices of the base sequences may be changed/determined.

For example, when RNTI = 0x8000, the index of the first base sequence used for PDCCH transmission may be 0, and when RNTI = 0x8001, the index of the first base sequence may be 1. When RNTI = 0x9000, the index of the second base sequence (sequence different from the first base sequence) used for PDCCH transmission may be 0, and when RNTI = 0x9001, the index of the second base sequence may be 1.

The base sequences associated with the DCI/RNTI/SS may presuppose a plurality of receptions.

For example, the UE may receive the sequence-based PDCCH corresponding to the base sequence indicating an ACK/NACK for UL transmission in the first time, and receive the sequence-based PDCCH corresponding to the base sequence indicating information indicating resources of the initial transmission/retransmission in the second time.

A plurality of sequence-based PDCCHs having the same type of base sequence may be multiplexed by using TDM/FDM/space division multiplexing (SDM/code division multiplexing (CDM)).

According to (or for each) DCI/RNTI/SS/CORESET/aggregation level, at least one of the following may be defined in advance, or a parameter for specifying a related value may be notified to the UE by using RRC/MAC CE.
- Phase rotation amount in the CS
- Frequency resources
- Time resources

The UE that receives the same DCI is not limited to one UE, and a plurality of UEs may perform the reception. For example, the UE with the same SS/RNTI (the UE configured with the same SS/RNTI for DCI reception) may receive the same DCI (for example, broadcast information).

### <Multiplexed Transmission in Sequence-Based DL Data>

In the sequence-based DL data, at least one of the following may be transmitted by using TDM/FDM/SDM/CDM:
- Base sequence,
- CS (phase rotation amount),
- Frequency resources,
- Time resources.

Different base sequences may be configured for each UE/SS/CORESET/DCI format by RRC/MAC CE.

Different phase rotation amounts of CSs may be configured for each UE/SS/CORESET/DCI format by RRC/MAC CE.

Different time resources may be configured for each UE/SS/CORESET/DCI format by RRC/MAC CE.

Different frequency resources may be configured for each UE/SS/CORESET/DCI format by RRC/MAC CE.

### <Supplements>

### {Notification of Information to UE}

Notification of any information to a UE (from a network (NW) (for example, a base station (BS))) (in other words, reception of any information from the BS in the UE) in the above-described embodiments may be performed by using physical layer signaling (for example, DCI), higher layer signaling (for example, RRC signaling, MAC CE), a specific signal/channel (for example, a PDCCH, a PDSCH, a reference signal), or a combination of these.

When the notification is performed by a MAC CE, the MAC CE may be identified by a new logical channel ID (LCID) not defined in an existing standard being included in a MAC subheader.

When the notification is performed by DCI, the notification may be performed by a specific field of the DCI, a radio network temporary identifier (RNTI) used for scrambling of cyclic redundancy check (CRC) bits given to the DCI, a format of the DCI, or the like.

Notification of any information to a UE in the above-described embodiments may be performed periodically, semi-persistently, or aperiodically.

### {Notification of Information from UE}

Notification of any information from a UE (to an NW) (in other words, transmission/reporting of any information to the BS from the UE) in the above-described embodiments may be performed by using physical layer signaling (for example, UCI), higher layer signaling (for example, RRC signaling, MAC CE), a specific signal/channel (for example, a PUCCH, a PUSCH, a PRACH, a reference signal), or a combination of these.

When the notification is performed by a MAC CE, the MAC CE may be identified by a new LCID not defined in existing standards being included in a MAC subheader.

When the notification is performed by UCI, the notification may be transmitted by using a PUCCH or a PUSCH.

Notification of any information from a UE in the above-described embodiments may be performed periodically, semi-persistently, or aperiodically.

### {Regarding Application of Each Embodiment}

At least one of the above-described embodiments may be applied to a case satisfying a specific condition. The specific condition may be defined in a standard, or a UE/BS may be notified of the specific condition by using higher layer signaling/physical layer signaling.

At least one of the above-described embodiments may be applied only to a UE that has reported a specific UE capability or that supports the specific UE capability.

The specific UE capability may indicate at least one of the following:
- supporting of specific processing/operation/control/information regarding at least one of the embodiments described above
- supporting of sequence-based PDCCH transmission
- supporting of minimum quality guarantee operation

The specific UE capability may be capability applied over all the frequencies (commonly irrespective of frequency), capability per frequency (for example, one or a combination of cell, band, band combination, BWP, component carrier, and the like), capability per frequency range (for example, Frequency Range 1 (FR1), FR2, FR3, FR4, FR5, FR2-1, FR2-2), capability per subcarrier spacing (SCS), or capability per Feature Set (FS) or Feature Set Per Component-carrier (FSPC).

The specific UE capability may be capability applied over all the duplex schemes (commonly irrespective of duplex scheme) or capability per duplex scheme (for example, time division duplex (TDD) or frequency division duplex (FDD)).

At least one of the above-described embodiments may be applied when the UE is configured/activated/triggered with specific information related to the above-described embodiment (or performance of the operation of the above-described embodiment) by higher layer signaling/physical layer signaling. For example, the specific information may be information indicating enabling of sequence-based PDCCH transmission, any RRC parameter for a specific release (for example, Rel. 18/19), or the like.

When the UE does not support at least one of the specific UE capabilities above or is not configured with the specific information, operation of Rel. 15/16 may be applied, for example.

### (Supplementary Note)

Regarding one embodiment of the present disclosure, the following supplementary notes of the invention will be given.

### {Supplementary Note 1}

A terminal including:
a receiving section that receives sequence-based first downlink control information (DCI) not using a demodulation reference signal (DMRS); and
a control section that controls reception of second DCI using the DMRS, based on the first DCI.

### {Supplementary Note 2}

The terminal according to supplementary note 1, wherein the first DCI includes first information, and the second DCI includes second information not provided in the first information.

### {Supplementary Note 3}

The terminal according to supplementary note 1 or 2, wherein the first DCI includes information related to a resource of the second DCI.

### {Supplementary Note 4}

The terminal according to any one of supplementary notes 1 to 3, wherein the receiving section acquires the first DCI, based on a base sequence associated with a search space set for the first DCI.

### (Radio Communication System)

Hereinafter, a structure of a radio communication system according to one embodiment of the present disclosure will be described. In this radio communication system, the radio communication method according to each embodiment of the present disclosure described above may be used alone or may be used in combination for communication.

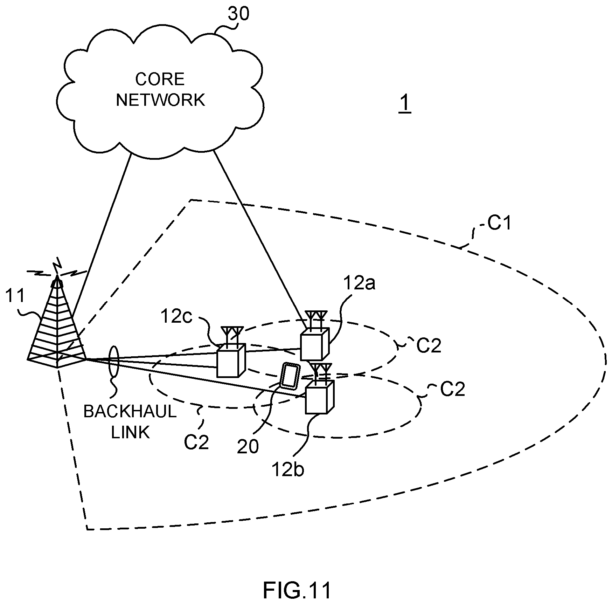

FIG. 11 is a diagram to show an example of a schematic structure of the radio communication system according to one embodiment. The radio communication system 1 (which may be simply referred to as system 1) may be a system implementing a communication using Long Term Evolution (LTE), 5th generation mobile communication system New Radio (5G NR) and so on the specifications of which have been drafted by Third Generation Partnership Project (3GPP).

The radio communication system 1 may support dual connectivity (multi-RAT dual connectivity (MR-DC)) between a plurality of Radio Access Technologies (RATs). The MR-DC may include dual connectivity (E-UTRA-NR Dual Connectivity (EN-DC)) between LTE (Evolved Universal Terrestrial Radio Access (E-UTRA)) and NR, dual connectivity (NR-E-UTRA Dual Connectivity (NE-DC)) between NR and LTE, and so on.

In EN-DC, a base station (eNB) of LTE (E-UTRA) is a master node (MN), and a base station (gNB) of NR is a secondary node (SN). In NE-DC, a base station (gNB) of NR is an MN, and a base station (eNB) of LTE (E-UTRA) is an SN.

The radio communication system 1 may support dual connectivity between a plurality of base stations in the same RAT (for example, dual connectivity (NR-NR Dual Connectivity (NN-DC)) where both of an MN and an SN are base stations (gNB) of NR).

The radio communication system 1 may include a base station 11 that forms a macro cell C1 of a relatively wide coverage, and base stations 12 (12a to 12c) that form small cells C2, which are placed within the macro cell C1 and which are narrower than the macro cell C1. The user terminal 20 may be located in at least one cell. The arrangement, the number, and the like of each cell and user terminal 20 are by no means limited to the aspect shown in the diagram. Hereinafter, the base stations 11 and 12 will be collectively referred to as "base stations 10," unless specified otherwise.

The user terminal 20 may be connected to at least one of the plurality of base stations 10. The user terminal 20 may use at least one of carrier aggregation (CA) and dual connectivity (DC) using a plurality of component carriers (CCs).

Each CC may be included in at least one of a first frequency band (Frequency Range 1 (FR1)) and a second frequency band (Frequency Range 2 (FR2)). The macro cell C1 may be included in FR1, and the small cells C2 may be included in FR2. For example, FR1 may be a frequency band of 6 GHz or less (sub-6 GHz), and FR2 may be a frequency band which is higher than 24 GHz (above-24 GHz). Note that frequency bands, definitions and so on of FR1 and FR2 are by no means limited to these, and for example, FR1 may correspond to a frequency band which is higher than FR2.

The user terminal 20 may communicate using at least one of time division duplex (TDD) and frequency division duplex (FDD) in each CC.

The plurality of base stations 10 may be connected by a wired connection (for example, optical fiber in compliance with the Common Public Radio Interface (CPRI), the X2 interface and so on) or a wireless connection (for example, an NR communication). For example, if an NR communication is used as a backhaul between the base stations 11 and 12, the base station 11 corresponding to a higher station may be referred to as an "Integrated Access Backhaul (IAB) donor," and the base station 12 corresponding to a relay station (relay) may be referred to as an "IAB node."

The base station 10 may be connected to a core network 30 through another base station 10 or directly. For example, the core network 30 may include at least one of Evolved Packet Core (EPC), 5G Core Network (5GCN), Next Generation Core (NGC), and so on.

The core network 30 may include network functions (NF), such as a User Plane Function (UPF), an Access and Mobility management Function (AMF), a Session Management Function (SMF), Unified Data Management (UDM), an Application Function (AF), a Data Network (DN), a Location Management Function (LMF), and operation, administration, and maintenance (Management) (OAM). Note that a plurality of functions may be provided by one network node. Communication with an external network (for example, the Internet) may be performed via the DN.

The user terminal 20 may be a terminal supporting at least one of communication schemes such as LTE, LTE-A, 5G, and so on.

In the radio communication system 1, an orthogonal frequency division multiplexing (OFDM)-based wireless access scheme may be used. For example, in at least one of the downlink (DL) and the uplink (UL), Cyclic Prefix OFDM (CP-OFDM), Discrete Fourier Transform Spread OFDM (DFT-s-OFDM), Orthogonal Frequency Division Multiple Access (OFDMA), Single Carrier Frequency Division Multiple Access (SC-FDMA), and so on may be used.

The wireless access scheme may be referred to as a "waveform." Note that, in the radio communication system 1, another wireless access scheme (for example, another single carrier transmission scheme, another multi-carrier transmission scheme) may be used for a wireless access scheme in the UL and the DL.

In the radio communication system 1, a downlink shared channel (Physical Downlink Shared Channel (PDSCH)), which is used by each user terminal 20 on a shared basis, a broadcast channel (Physical Broadcast Channel (PBCH)), a downlink control channel (Physical Downlink Control Channel (PDCCH)) and so on, may be used as downlink channels.

In the radio communication system 1, an uplink shared channel (Physical Uplink Shared Channel (PUSCH)), which is used by each user terminal 20 on a shared basis, an uplink control channel (Physical Uplink Control Channel (PUCCH)), a random access channel (Physical Random Access Channel (PRACH)) and so on may be used as uplink channels.

User data, higher layer control information, System Information Blocks (SIBs) and so on are communicated on the PDSCH. User data, higher layer control information and so on may be communicated on the PUSCH. The Master Information Blocks (MIBs) may be communicated on the PBCH.

Lower layer control information may be communicated on the PDCCH. For example, the lower layer control information may include downlink control information (DCI) including scheduling information of at least one of the PDSCH and the PUSCH.

Note that DCI for scheduling the PDSCH may be referred to as "DL assignment," "DL DCI," and so on, and DCI for scheduling the PUSCH may be referred to as "UL grant," "UL DCI," and so on. Note that the PDSCH may be interpreted as "DL data", and the PUSCH may be interpreted as "UL data".

For detection of the PDCCH, a control resource set (CORESET) and a search space may be used. The CORESET corresponds to a resource to search DCI. The search space corresponds to a search area and a search method of PDCCH candidates. One CORESET may be associated with one or more search spaces. The UE may monitor a CORESET associated with a certain search space, based on search space configuration.

One search space may correspond to a PDCCH candidate corresponding to one or more aggregation levels. One or more search spaces may be referred to as a "search space set." Note that a "search space," a "search space set," a "search space configuration," a "search space set configuration," a "CORESET," a "CORESET configuration" and so on of the present disclosure may be interchangeably interpreted.

Uplink control information (UCI) including at least one of channel state information (CSI), transmission confirmation information (for example, which may be referred to as Hybrid Automatic Repeat reQuest ACKnowledgement (HARQ-ACK), ACK/NACK, and so on), and scheduling request (SR) may be communicated by means of the PUCCH. By means of the PRACH, random access preambles for establishing connections with cells may be communicated.

Note that the downlink, the uplink, and so on in the present disclosure may be expressed without a term of "link." In addition, various channels may be expressed without adding "Physical" to the head.

In the radio communication system 1, a synchronization signal (SS), a downlink reference signal (DL-RS), and so on may be communicated. In the radio communication system 1, a cell-specific reference signal (CRS), a channel state information-reference signal (CSI-RS), a demodulation reference signal (DMRS), a positioning reference signal (PRS), a phase tracking reference signal (PTRS), and so on may be communicated as the DL-RS.

For example, the synchronization signal may be at least one of a primary synchronization signal (PSS) and a secondary synchronization signal (SSS). A signal block including an SS (PSS, SSS) and a PBCH (and a DMRS for a PBCH) may be referred to as an "SS/PBCH block," an "SS Block (SSB)," and so on. Note that an SS, an SSB, and so on may be referred to as a "reference signal."

In the radio communication system 1, a sounding reference signal (SRS), a demodulation reference signal (DMRS), and so on may be communicated as an uplink reference signal (UL-RS). Note that DMRS may be referred to as a "user terminal specific reference signal (UE-specific Reference Signal)."

### (Base Station)

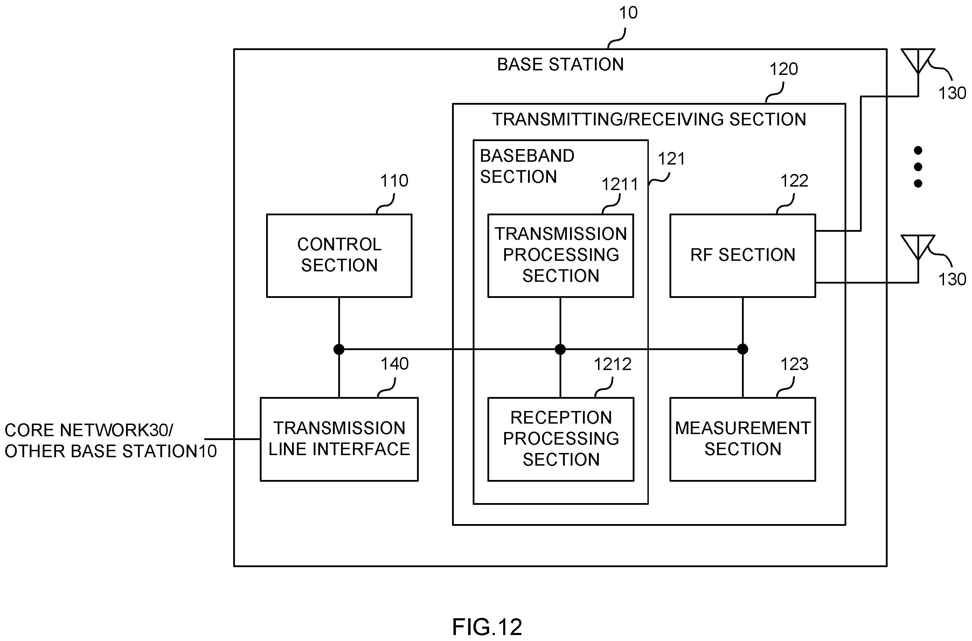

FIG. 12 is a diagram to show an example of a structure of the base station according to one embodiment. The base station 10 includes a control section 110, a transmitting/receiving section 120, transmitting/receiving antennas 130 and a communication path interface (transmission line interface) 140. Note that the base station 10 may include one or more control sections 110, one or more transmitting/receiving sections 120, one or more transmitting/receiving antennas 130, and one or more communication path interfaces 140.

Note that, the present example primarily shows functional blocks that pertain to characteristic parts of the present embodiment, and it is assumed that the base station 10 may include other functional blocks that are necessary for radio communication as well. Part of the processes of each section described below may be omitted.

The control section 110 controls the whole of the base station 10. The control section 110 can be constituted with a controller, a control circuit, or the like described based on general understanding of the technical field to which the present disclosure pertains.

The control section 110 may control generation of signals, scheduling (for example, resource allocation, mapping), and so on. The control section 110 may control transmission and reception, measurement and so on using the transmitting/receiving section 120, the transmitting/receiving antennas 130, and the communication path interface 140. The control section 110 may generate data, control information, a sequence and so on to transmit as a signal, and forward the generated items to the transmitting/receiving section 120. The control section 110 may perform call processing (setting up, releasing) for communication channels, manage the state of the base station 10, and manage the radio resources.

The transmitting/receiving section 120 may include a baseband section 121, a Radio Frequency (RF) section 122, and a measurement section 123. The baseband section 121 may include a transmission processing section 1211 and a reception processing section 1212. The transmitting/receiving section 120 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 120 may be structured as a transmitting/receiving section in one entity, or may be constituted with a transmitting section and a receiving section. The transmitting section may be constituted with the transmission processing section 1211, and the RF section 122. The receiving section may be constituted with the reception processing section 1212, the RF section 122, and the measurement section 123.

The transmitting/receiving antennas 130 can be constituted with antennas, for example, an array antenna, or the like described based on general understanding of the technical field to which the present disclosure pertains.

The transmitting/receiving section 120 may transmit the above-described downlink channel, synchronization signal, downlink reference signal, and so on. The transmitting/receiving section 120 may receive the above-described uplink channel, uplink reference signal, and so on.

The transmitting/receiving section 120 may form at least one of a transmit beam and a receive beam by using digital beam forming (for example, precoding), analog beam forming (for example, phase rotation), and so on.

The transmitting/receiving section 120 (transmission processing section 1211) may perform the processing of the Packet Data Convergence Protocol (PDCP) layer, the processing of the Radio Link Control (RLC) layer (for example, RLC retransmission control), the processing of the Medium Access Control (MAC) layer (for example, HARQ retransmission control), and so on, for example, on data and control information and so on acquired from the control section 110, and may generate bit string to transmit.

The transmitting/receiving section 120 (transmission processing section 1211) may perform transmission processing such as channel coding (which may include error correction coding), modulation, mapping, filtering, discrete Fourier transform (DFT) processing (as necessary), inverse fast Fourier transform (IFFT) processing, precoding, digital-to-analog conversion, and so on, on the bit string to transmit, and output a baseband signal.

The transmitting/receiving section 120 (RF section 122) may perform modulation to a radio frequency band, filtering, amplification, and so on, on the baseband signal, and transmit the signal of the radio frequency band through the transmitting/receiving antennas 130.

On the other hand, the transmitting/receiving section 120 (RF section 122) may perform amplification, filtering, demodulation to a baseband signal, and so on, on the signal of the radio frequency band received by the transmitting/receiving antennas 130.

The transmitting/receiving section 120 (reception processing section 1212) may apply reception processing such as analog-digital conversion, fast Fourier transform (FFT) processing, inverse discrete Fourier transform (IDFT) processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 120 (measurement section 123) may perform the measurement related to the received signal. For example, the measurement section 123 may perform Radio Resource Management (RRM) measurement, Channel State Information (CSI) measurement, and so on, based on the received signal. The measurement section 123 may measure a received power (for example, Reference Signal Received Power (RSRP)), a received quality (for example, Reference Signal Received Quality (RSRQ), a Signal to Interference plus Noise Ratio (SINR), a Signal to Noise Ratio (SNR)), a signal strength (for example, Received Signal Strength Indicator (RSSI)), channel information (for example, CSI), and so on. The measurement results may be output to the control section 110.

The communication path interface 140 may perform transmission/reception (backhaul signaling) of a signal with an apparatus included in the core network 30 (for example, a network node providing NF) or other base stations 10, and so on, and acquire or transmit user data (user plane data), control plane data, and so on for the user terminal 20.

Note that the transmitting section and the receiving section of the base station 10 in the present disclosure may be constituted with at least one of the transmitting/receiving section 120, the transmitting/receiving antennas 130, and the communication path interface 140.

Note that the transmitting/receiving section 120 may transmit sequence-based first downlink control information (DCI) not using a demodulation reference signal (DMRS). Note that the sequence-based first downlink control information (DCI) not using the demodulation reference signal (DMRS) may be interpreted as sequence-based DCI.

The control section 110 may control transmission of second DCI using the DMRS, based on the first DCI. The second DCI using the DMRS may be interpreted as DMRS-based DCI.

### (User Terminal)

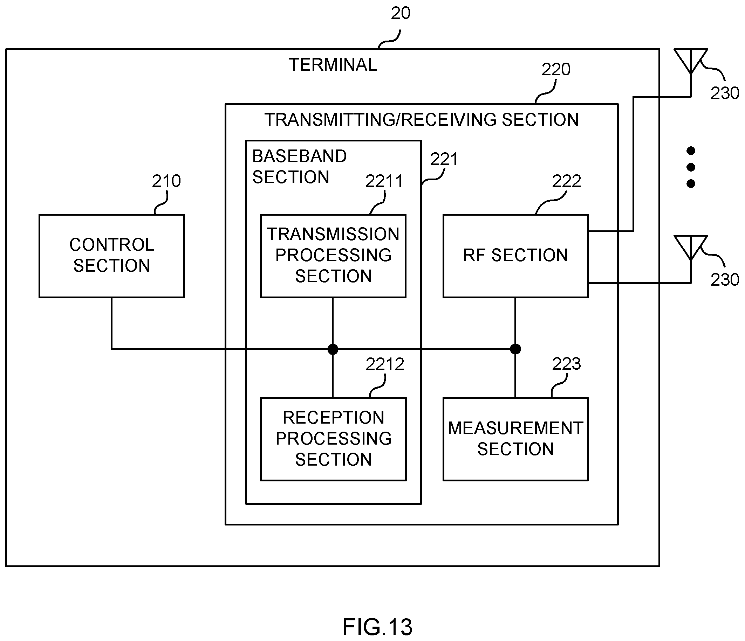

FIG. 13 is a diagram to show an example of a structure of the user terminal according to one embodiment. The user terminal 20 includes a control section 210, a transmitting/receiving section 220, and transmitting/receiving antennas 230. Note that the user terminal 20 may include one or more control sections 210, one or more transmitting/receiving sections 220, and one or more transmitting/receiving antennas 230.

Note that, the present example primarily shows functional blocks that pertain to characteristic parts of the present embodiment, and it is assumed that the user terminal 20 may include other functional blocks that are necessary for radio communication as well. Part of the processes of each section described below may be omitted.

The control section 210 controls the whole of the user terminal 20. The control section 210 can be constituted with a controller, a control circuit, or the like described based on general understanding of the technical field to which the present disclosure pertains.

The control section 210 may control generation of signals, mapping, and so on. The control section 210 may control transmission/reception, measurement and so on using the transmitting/receiving section 220, and the transmitting/receiving antennas 230. The control section 210 generates data, control information, a sequence and so on to transmit as a signal, and may forward the generated items to the transmitting/receiving section 220.

The transmitting/receiving section 220 may include a baseband section 221, an RF section 222, and a measurement section 223. The baseband section 221 may include a transmission processing section 2211 and a reception processing section 2212. The transmitting/receiving section 220 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 220 may be structured as a transmitting/receiving section in one entity, or may be constituted with a transmitting section and a receiving section. The transmitting section may be constituted with the transmission processing section 2211, and the RF section 222. The receiving section may be constituted with the reception processing section 2212, the RF section 222, and the measurement section 223.

The transmitting/receiving antennas 230 can be constituted with antennas, for example, an array antenna, or the like described based on general understanding of the technical field to which the present disclosure pertains.

The transmitting/receiving section 220 may receive the above-described downlink channel, synchronization signal, downlink reference signal, and so on. The transmitting/receiving section 220 may transmit the above-described uplink channel, uplink reference signal, and so on.

The transmitting/receiving section 220 may form at least one of a transmit beam and a receive beam by using digital beam forming (for example, precoding), analog beam forming (for example, phase rotation), and so on.

The transmitting/receiving section 220 (transmission processing section 2211) may perform the processing of the PDCP layer, the processing of the RLC layer (for example, RLC retransmission control), the processing of the MAC layer (for example, HARQ retransmission control), and so on, for example, on data and control information and so on acquired from the control section 210, and may generate bit string to transmit.

The transmitting/receiving section 220 (transmission processing section 2211) may perform transmission processing such as channel coding (which may include error correction coding), modulation, mapping, filtering, DFT processing (as necessary), IFFT processing, precoding, digital-to-analog conversion, and so on, on the bit string to transmit, and output a baseband signal.

Note that, whether to apply DFT processing or not may be based on the configuration of the transform precoding. The transmitting/receiving section 220 (transmission processing section 2211) may perform, for a certain channel (for example, PUSCH), the DFT processing as the above-described transmission processing to transmit the channel by using a DFT-s-OFDM waveform if transform precoding is enabled, and otherwise, does not need to perform the DFT processing as the above-described transmission processing.

The transmitting/receiving section 220 (RF section 222) may perform modulation to a radio frequency band, filtering, amplification, and so on, on the baseband signal, and transmit the signal of the radio frequency band through the transmitting/receiving antennas 230.

On the other hand, the transmitting/receiving section 220 (RF section 222) may perform amplification, filtering, demodulation to a baseband signal, and so on, on the signal of the radio frequency band received by the transmitting/receiving antennas 230.

The transmitting/receiving section 220 (reception processing section 2212) may apply reception processing such as analog-digital conversion, FFT processing, IDFT processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 220 (measurement section 223) may perform the measurement related to the received signal. For example, the measurement section 223 may perform RRM measurement, CSI measurement, and so on, based on the received signal. The measurement section 223 may measure a received power (for example, RSRP), a received quality (for example, RSRQ, SINR, SNR), a signal strength (for example, RSSI), channel information (for example, CSI), and so on. The measurement results may be output to the control section 210.

Note that the measurement section 223 may derive channel measurement for CSI calculation, based on a resource for channel measurement. The resource for channel measurement may be, for example, a non zero power (NZP) CSI-RS resource. The measurement section 223 may derive interference measurement for CSI calculation, based on a resource for interference measurement. The resource for interference measurement may be at least one of an NZP CSI-RS resource for interference measurement, a CSI-interference measurement (IM) resource, and the like. Note that CSI-IM may be referred to as CSI-interference management (IM), and may be interchangeably interpreted as zero power (ZP) CSI-RS. Note that, in the present disclosure, the CSI-RS, the NZP CSI-RS, the ZP CSI-RS, the CSI-IM, a CSI-SSB, and the like may be interchangeably interpreted.

Note that the transmitting section and the receiving section of the user terminal 20 in the present disclosure may be constituted with at least one of the transmitting/receiving section 220 and the transmitting/receiving antennas 230.

Note that the transmitting/receiving section 220 may receive sequence-based first downlink control information (DCI) not using a demodulation reference signal (DMRS). Note that the sequence-based first downlink control information (DCI) not using the demodulation reference signal (DMRS) may be interpreted as sequence-based DCI.

The control section 210 may control reception of second DCI using the DMRS, based on the first DCI. The second DCI using the DMRS may be interpreted as DMRS-based DCI.

The first DCI may include first information, and the second DCI may include second information not provided in the first information. The first information may be x (x < M) bit information being at least a part of information provided on the DMRS-based DCI (M bit information provided on the DCI1 of FIG. 1), and in this case, the second information may be M-x bit information not provided in the first information out of the information provided on the DMRS-based DCI (M bit information provided on the DCI1 of FIG. 1). The first information may be information for specifying the second DCI (DMRS-based DCI).

The first DCI may include information related to a resource of the second DCI. The information may be at least a part of a part of resource information (for example, an aggregation level/DCI format/control channel element (CCE) index, or the like) of any DCI format/search space set (SS)/CORESET/PDCCH of existing specifications (on a DMRS basis).

The transmitting/receiving section 220 may acquire the first DCI, based on a base sequence associated with a search space set for the first DCI. The search space set may be a CSS or a USS. The base sequence may include one or more of a pseudo-random sequence, a ZC sequence, a CG sequence, and an M-sequence.

The resource of the second DCI may be associated with at least one of a frequency resource and a time resource of the first DCI.

### (Hardware Structure)

Note that the block diagrams that have been used to describe the above embodiments show blocks in functional units. These functional blocks (components) may be implemented in arbitrary combinations of at least one of hardware and software. Also, the method for implementing each functional block is not particularly limited. That is, each functional block may be realized by one piece of apparatus that is physically or logically coupled, or may be realized by directly or indirectly connecting two or more physically or logically separate apparatuses (for example, via wire, wireless, or the like) and using these apparatuses. The functional blocks may be implemented by combining software into the apparatus described above or the plurality of apparatuses described above.

Here, functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but functions are by no means limited to these. For example, a functional block (component) to implement a function of transmission may be referred to as a "transmitting section (transmitting unit)", a "transmitter", or the like. The method for implementing each component is not particularly limited as described above.

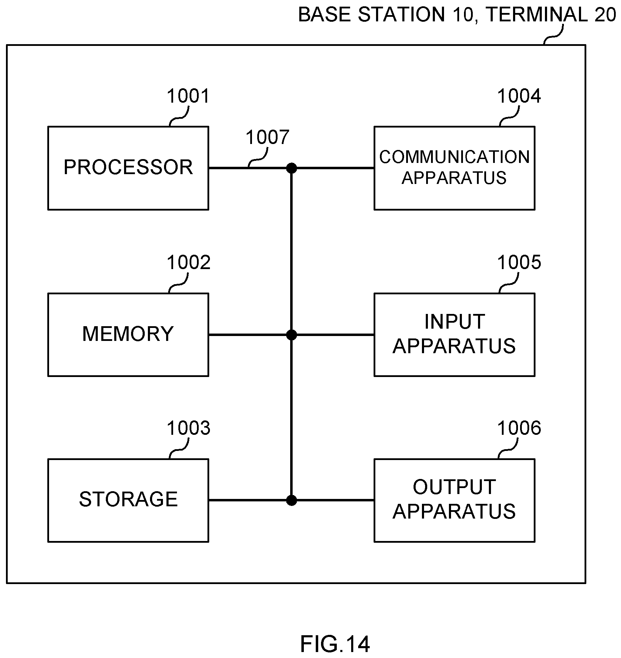

For example, a base station, a user terminal, and so on according to one embodiment of the present disclosure may function as a computer that executes the processes of the radio communication method of the present disclosure. FIG. 14 is a diagram to show an example of a hardware structure of the base station and the user terminal according to one embodiment. Physically, the above-described base station 10 and user terminal 20 may each be formed as a computer apparatus that includes a processor 1001, a memory 1002, a storage 1003, a communication apparatus 1004, an input apparatus 1005, an output apparatus 1006, a bus 1007, and so on.

Note that in the present disclosure, the words such as an apparatus, a circuit, a device, a section, a unit, and so on can be interchangeably used. The hardware structure of the base station 10 and the user terminal 20 may be configured to include one or more of apparatuses shown in the drawings, or may be configured not to include part of apparatuses.

For example, although one processor 1001 is shown in the drawings, a plurality of processors may be provided. Furthermore, processes may be implemented with one processor or may be implemented at the same time, in sequence, or in different manners with two or more processors. Note that the processor 1001 may be implemented with one or more chips.

Each function of the base station 10 and the user terminal 20 is implemented, for example, by allowing certain software (programs) to be read on hardware such as the processor 1001 and the memory 1002, and by allowing the processor 1001 to perform calculations to control communication via the communication apparatus 1004 and control at least one of reading and writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, at least a part of the control section 110 (210), the transmitting/receiving section 120 (220), and so on may be implemented by the processor 1001.

Furthermore, the processor 1001 reads programs (program codes), software modules, data, and so on from at least one of the storage 1003 and the communication apparatus 1004, into the memory 1002, and executes various processes according to these. As for the programs, programs to allow computers to execute at least a part of the operations explained in the above-described embodiments are used. For example, the control section 110 (210) may be implemented by control programs that are stored in the memory 1002 and that operate on the processor 1001, and other functional blocks may be implemented likewise.

The memory 1002 is a computer-readable recording medium, and may be constituted with, for example, at least one of a Read Only Memory (ROM), an Erasable Programmable ROM (EPROM), an Electrically EPROM (EEPROM), a Random Access Memory (RAM), and other appropriate storage media. The memory 1002 may be referred to as a "register", a "cache", a "main memory (primary storage apparatus)" and so on. The memory 1002 can store executable programs (program codes), software modules, and the like for implementing the radio communication method according to one embodiment of the present disclosure.

The storage 1003 is a computer-readable recording medium, and may be constituted with, for example, at least one of a flexible disk, a floppy (registered trademark) disk, a magneto-optical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, and other appropriate storage media. The storage 1003 may be referred to as "auxiliary storage apparatus".

The communication apparatus 1004 is hardware (transmitting/receiving device) for allowing inter-computer communication via at least one of wired and wireless networks, and may be referred to as, for example, a "network device", a "network controller", a "network card", a "communication module", and so on. The communication apparatus 1004 may be configured to include a high frequency switch, a duplexer, a filter, a frequency synthesizer, and so on in order to realize, for example, at least one of frequency division duplex (FDD) and time division duplex (TDD). For example, the transmitting/receiving section 120 (220), the transmitting/receiving antenna 130 (230), and so on may be implemented by the communication apparatus 1004. In the transmitting/receiving section 120 (220), the transmitting section 120a (220a) and the receiving section 120b (220b) can be implemented while being separated physically or logically.

The input apparatus 1005 is an input device that receives input from the outside (for example, a keyboard, a mouse, a microphone, a switch, a button, a sensor or the like). The output apparatus 1006 is an output device that allows sending output to the outside (for example, a display, a speaker, a Light Emitting Diode (LED) lamp or the like). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between apparatuses.

Also, the base station 10 and the user terminal 20 may be structured to include hardware such as a microprocessor, a Digital Signal Processor (DSP), an Application Specific Integrated Circuit (ASIC), a Programmable Logic Device (PLD), a Field Programmable Gate Array (FPGA), and so on, and a part or all of the functional blocks may be implemented by the hardware. For example, the processor 1001 may be implemented with at least one of these pieces of hardware.

### (Variations)

It should be noted that a term used in the present disclosure and a term required for understanding of the present disclosure may be replaced by a term having the same or similar meaning. For example, a channel, a symbol, and a signal (or signaling) may be interchangeably used. Further, a signal may be a message. A reference signal may be abbreviated as an RS, and may be referred to as a pilot, a pilot signal or the like, depending on which standard applies. Furthermore, a component carrier (CC) may be referred to as a cell, a frequency carrier, a carrier frequency and so on.

A radio frame may be constituted of one or a plurality of periods (frames) in the time domain. Each of one or a plurality of periods (frames) constituting a radio frame may be referred to as a "subframe". Furthermore, a subframe may be constituted of one or a plurality of slots in the time domain. A subframe may be a fixed time length (for example, 1 ms) independent of numerology.

Here, numerology may be a communication parameter applied to at least one of transmission and reception of a certain signal or channel. For example, numerology may indicate at least one of a subcarrier spacing (SCS), a bandwidth, a symbol length, a cyclic prefix length, a transmission time interval (TTI), the number of symbols per TTI, a radio frame structure, a specific filter processing performed by a transceiver in the frequency domain, a specific windowing processing performed by a transceiver in the time domain, and so on.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot". A mini-slot may be constituted of symbols in number less than the slot. A PDSCH (or PUSCH) transmitted in a time unit larger than a mini-slot may be referred to as "PDSCH (PUSCH) mapping type A". A PDSCH (or PUSCH) transmitted using a mini-slot may be referred to as "PDSCH (PUSCH) mapping type B".

A radio frame, a subframe, a slot, a mini-slot, and a symbol all express time units in signal communication. A radio frame, a subframe, a slot, a mini-slot, and a symbol may each be called by other applicable terms. Note that time units such as a frame, a subframe, a slot, mini-slot, and a symbol in the present disclosure may be interchangeably used.

For example, one subframe may be referred to as a "TTI", a plurality of consecutive subframes may be referred to as a "TTI", or one slot or one mini-slot may be referred to as a "TTI". In other words, at least one of a subframe and a TTI may be a subframe (1 ms) in existing LTE, may be a period shorter than 1 ms (for example, 1 to 13 symbols), or may be a period longer than 1 ms. Note that a unit expressing TTI may be referred to as a "slot", a "mini-slot", or the like, instead of a "subframe".

Here, a TTI refers to the minimum time unit of scheduling in radio communication, for example. For example, in LTE systems, a base station performs, for user terminals, scheduling of allocating of radio resources (such as a frequency bandwidth and transmit power that are available for each user terminal) in TTI units. Note that the definition of TTIs is not limited to this.

The TTI may be a transmission time unit for channel-encoded data packets (transport blocks), code blocks, codewords, or the like, or may be a unit of processing in scheduling, link adaptation, or the like. Note that, when a TTI is given, a time interval (for example, the number of symbols) to which transport blocks, code blocks, codewords, or the like are actually mapped may be shorter than the TTI.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in 3GPP Rel. 8 to Rel. 12), a "long TTI", a "normal subframe", a "long subframe", a "slot" and so on. A TTI that is shorter than a normal TTI may be referred to as a "shortened TTI", a "short TTI", a "partial or fractional TTI", a "shortened subframe", a "short subframe", a "mini-slot", a "sub-slot", a "slot" and so on.

Note that a long TTI (for example, a normal TTI, a subframe, and so on) may be interpreted as a TTI having a time length exceeding 1 ms, and a short TTI (for example, a shortened TTI and so on) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

Also, an RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (Physical RB (PRB))", a "sub-carrier group (SCG)", a "resource element group (REG)", a "PRB pair", an "RB pair" and so on.

Furthermore, a resource block may be constituted of one or a plurality of resource elements (REs). For example, one RE may correspond to a radio resource field of one subcarrier and one symbol.

A bandwidth part (BWP) (which may be referred to as a "fractional bandwidth", and so on) may represent a subset of contiguous common resource blocks (common RBs) for certain numerology in a certain carrier. Here, a common RB may be specified by an index of the RB based on the common reference point of the carrier. A PRB may be defined by a certain BWP and may be numbered in the BWP.

The BWP may include a UL BWP (BWP for UL) and a DL BWP (BWP for DL). One or a plurality of BWPs may be configured in one carrier for a UE.

At least one of configured BWPs may be active, and a UE may not need to assume to transmit/receive a certain signal/channel outside the active BWP(s). Note that a "cell", a "carrier", and so on in the present disclosure may be used interchangeably with a "BWP".

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

Further, the information, parameters, and so on described in the present disclosure may be expressed using absolute values or relative values with respect to certain values, or may be expressed using another corresponding information. For example, a radio resource may be specified by a certain index.

The names used for parameters and so on in the present disclosure are in no respect used as limitations. Furthermore, mathematical expressions that use these parameters, and so on may be different from those explicitly disclosed in the present disclosure. Since various channels (PUCCH, PDCCH, and so on) and information elements may be identified by any suitable names, the various names allocated to these various channels and information elements are in no respect used as limitations.

The information, signals, and so on described in the present disclosure may be represented by using any of a variety of different technologies. For example, data, an instruction, a command, information, a signal, a bit, a symbol, a chip, and so on, described throughout the description of the present application, may be represented by a voltage, an electric current, electromagnetic waves, magnetic fields, a magnetic particle, optical fields, a photon, or any combination thereof.

Also, information, signals, and so on can be output at least one of from a higher layer to a lower layer and from a lower layer to a higher layer. Information, signals, and so on may be input and/or output via a plurality of network nodes.

The information, signals, and so on that are input and/or output may be stored in a specific location (for example, a memory) or may be managed by using a management table. The information, signals, and so on to be input and/or output can be overwritten, updated, or added. The information, signals, and so on that has been output may be deleted. The information, signals, and so on that has been input may be transmitted to another apparatus.

Notification of information is by no means limited to the aspects/embodiments described in the present disclosure, and other methods may be used as well. For example, notification of information in the present disclosure may be implemented by using physical layer signaling (for example, downlink control information (DCI), uplink control information (UCI)), higher layer signaling (for example, Radio Resource Control (RRC) signaling, broadcast information (master information block (MIB), system information block (SIB), and so on), Medium Access Control (MAC) signaling and so on), and other signals or combinations of these.

Note that physical layer signaling may be referred to as "Layer 1/Layer 2 (L1/L2) control information (L1/L2 control signals)", "L1 control information (L1 control signal)", and so on. Also, RRC signaling may be referred to as an "RRC message", and can be, for example, an RRC connection setup message, an RRC connection reconfiguration message, and so on. Also, MAC signaling may be notified using, for example, MAC control elements (MAC CEs).

Also, notification of certain information (for example, notification of "X") does not necessarily have to be performed explicitly, and can be performed implicitly (by, for example, not reporting this certain information or reporting another piece of information).

A decision may be realized by a value (0 or 1) represented by one bit, by a boolean value (true or false), or by comparison of numerical values (e.g., comparison with a certain value).

Software, irrespective of whether referred to as "software", "firmware", "middleware", "microcode", or "hardware description language", or called by other terms, should be interpreted broadly to mean instructions, instruction sets, codes, code segments, program codes, programs, subprograms, software modules, applications, software applications, software packages, routines, subroutines, objects, executable files, execution threads, procedures, functions, and the like.

Also, software, instructions, information, and the like may be transmitted and received via a transmission medium. For example, when software is transmitted from a website, a server, or other remote sources by using at least one of wired technologies (coaxial cable, fiber optic cable, twisted-pair cable, digital subscriber line (DSL), and so on) and wireless technologies (infrared radiation, microwaves, and so on), at least one of these wired technologies and wireless technologies is also included in the definition of the transmission medium.

The terms "system" and "network" used in the present disclosure may be used interchangeably. The "network" may mean an apparatus (for example, a base station) included in the network.

In the present disclosure, the terms such as "precoding", a "precoder", a "weight (precoding weight)", "quasi-co-location (QCL)", a "Transmission Configuration Indication state (TCI state)", a "spatial relation", a "spatial domain filter", a "transmit power", "phase rotation", an "antenna port", a "layer", "the number of layers", a "rank", a "resource", a "resource set", a "beam", a "beam width", a "beam angular degree", an "antenna", an "antenna element", a "panel", a "UE panel", a "transmission entity", a "reception entity", and so on may be used interchangeably.

Note that, in the present disclosure, the "antenna port" may be used interchangeably with an "antenna port for an arbitrary signal/channel" (for example, a demodulation reference signal (DMRS) port). In the present disclosure, the "resource" may be used interchangeably with a "resource for an arbitrary signal/channel" (e.g., a reference signal resource, an SRS resource, and the like). The resource may include time/frequency/code/space/power resource. The spatial domain transmission filter may include at least one of a spatial domain transmission filter and a spatial domain reception filter.

The group may include at least one of, for example, a spatial relationship group, a code division multiplexing (CDM) group, a reference signal (RS) group, a control resource set (CORESET) group, a PUCCH group, an antenna port group (for example, a DMRS port group), a layer group, a resource group, a beam group, an antenna group, a panel group, and the like.

In the present disclosure, a "beam", an "SRS resource indicator (SRI)", a "CORESET", a "CORESET pool", a "PDSCH", a "PUSCH", a "codeword (CW)", a "transport block (TB)", an "RS", and the like may be interchangeably used.

In the present disclosure, a "TCI state", a "downlink TCI state (DL TCI state)", an "uplink TCI state (UL TCI state)", a "unified TCI state", a "common TCI state", a "joint TCI state", and the like may be used interchangeably.

In the present disclosure, "QCL", "QCL assumption", "QCL relationship", "QCL type information", "QCL property/properties", "specific QCL type (e.g., type A, type D) property", "specific QCL type (e.g., type A, type D)", and the like may be used interchangeably.

In the present disclosure, an "index", an "identifier (ID)", an "indicator", "indication", a "resource ID", and the like may be used interchangeably. In the present disclosure, a sequence, a list, a set, a group, a cluster, a subset, and the like may be used interchangeably.

A spatial relation information identifier (ID) (TCI state ID) and spatial relation information (TCI state) may be interchangeably used. "Spatial relation information (TCI state)" may be used interchangeably with "a set of spatial relation information (TCI state)", "one or a plurality of spatial relation information", and the like. The TCI state and the TCI may be used interchangeably. The spatial relation information and the spatial relation may be used interchangeably.

In the present disclosure, the terms such as a "base station (BS)", a "radio base station", a "fixed station," a "NodeB", an "eNB (eNodeB)", a "gNB (gNodeB)", an "access point", a "transmission point (TP)", a "reception point (RP)", a "transmission/reception point (TRP)", a "panel", a "cell", a "sector", a "cell group", a "carrier", a "component carrier", and so on can be used interchangeably. The base station may be referred to as the terms such as a "macro cell", a "small cell", a "femto cell", a "pico cell", and so on.

A base station can accommodate one or a plurality of (for example, three) cells. When a base station accommodates a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part of or the entire coverage area of at least one of a base station and a base station subsystem that provides communication services within this coverage.

In the present disclosure, transmitting information to the terminal by the base station may be interchangeably interpreted as instructing the terminal to perform control/operation based on the information by the base station.

In the present disclosure, the terms "mobile station (MS)", "user terminal", "user equipment (UE)", and "terminal" may be used interchangeably.

A mobile station may be referred to as a "subscriber station", "mobile unit", "subscriber unit", "wireless unit", "remote unit", "mobile device", "wireless device", "wireless communication device", "remote device", "mobile subscriber station", "access terminal", "mobile terminal", "wireless terminal", "remote terminal", "handset", "user agent", "mobile client", "client", or some other appropriate terms in some cases.

At least one of a base station and a mobile station may be referred to as a "transmitting apparatus", a "receiving apparatus", a "radio communication apparatus" or the like. Note that at least one of a base station and a mobile station may be a device mounted on a moving object or a moving object itself, and so on.

The moving object is a movable object with any moving speed, and naturally, it also includes a moving object stopped. Examples of the moving object include a vehicle, a transport vehicle, an automobile, a motorcycle, a bicycle, a connected car, a loading shovel, a bulldozer, a wheel loader, a dump truck, a fork lift, a train, a bus, a trolley, a rickshaw, a ship and other watercraft, an airplane, a rocket, a satellite, a drone, a multicopter, a quadcopter, a balloon, and an object mounted on any of these, but these are not restrictive. The moving object may be a moving object that autonomously travels based on a direction for moving.

The moving object may be a vehicle (for example, a car, an airplane, and the like), may be a moving object which moves unmanned (for example, a drone, an automatic operation car, and the like), or may be a robot (a manned type or unmanned type). Note that at least one of a base station and a mobile station also includes an apparatus which does not necessarily move during communication operation. For example, at least one of a base station and a mobile station may be an Internet of Things (IoT) device such as a sensor.

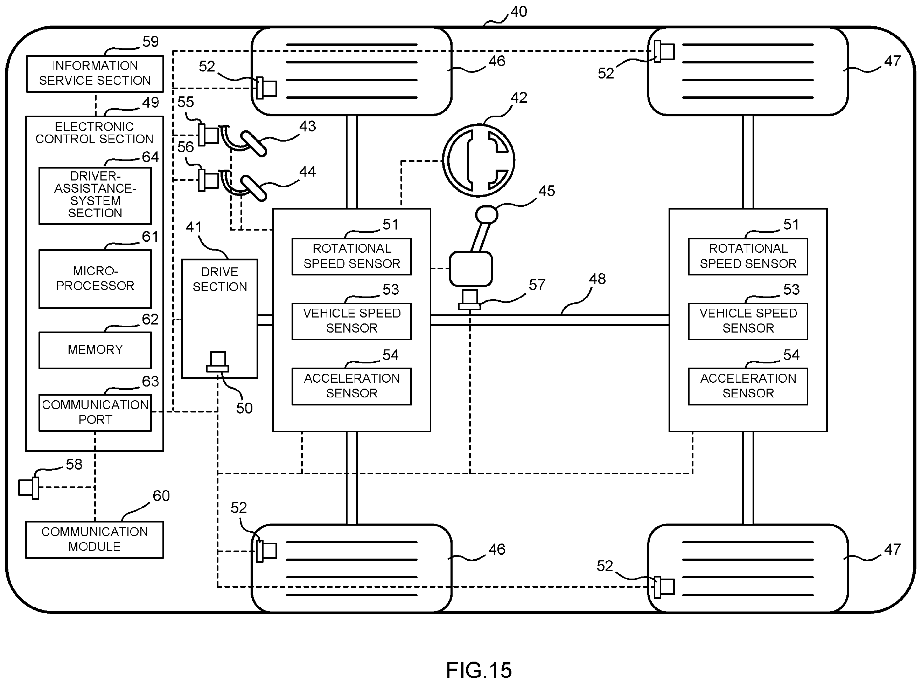

FIG. 15 is a diagram to show an example of a vehicle according to one embodiment. A vehicle 40 includes a driving section 41, a steering section 42, an accelerator pedal 43, a brake pedal 44, a shift lever 45, right and left front wheels 46, right and left rear wheels 47, an axle 48, an electronic control section 49, various sensors (including a current sensor 50, a rotational speed sensor 51, a pneumatic sensor 52, a vehicle speed sensor 53, an acceleration sensor 54, an accelerator pedal sensor 55, a brake pedal sensor 56, a shift lever sensor 57, and an object detection sensor 58), an information service section 59, and a communication module 60.

The driving section 41 includes, for example, at least one of an engine, a motor, and a hybrid of an engine and a motor. The steering section 42 includes at least a steering wheel (also referred to as a handle), and is configured to steer at least one of the front wheels 46 and the rear wheels 47, based on operation of the steering wheel operated by a user.

The electronic control section 49 includes a microprocessor 61, a memory (ROM, RAM) 62, and a communication port (for example, an input/output (IO) port) 63. The electronic control section 49 receives, as input, signals from the various sensors 50 to 58 provided in the vehicle. The electronic control section 49 may be referred to as an Electronic Control Unit (ECU).

Examples of the signals from the various sensors 50 to 58 include a current signal from the current sensor 50 for sensing current of a motor, a rotational speed signal of the front wheels 46/rear wheels 47 acquired by the rotational speed sensor 51, a pneumatic signal of the front wheels 46/rear wheels 47 acquired by the pneumatic sensor 52, a vehicle speed signal acquired by the vehicle speed sensor 53, an acceleration signal acquired by the acceleration sensor 54, a depressing amount signal of the accelerator pedal 43 acquired by the accelerator pedal sensor 55, a depressing amount signal of the brake pedal 44 acquired by the brake pedal sensor 56, an operation signal of the shift lever 45 acquired by the shift lever sensor 57, and a detection signal for detecting an obstruction, a vehicle, a pedestrian, and the like acquired by the object detection sensor 58.

The information service section 59 includes: various devices for providing (outputting) various pieces of information such as driving information, traffic information, and entertainment information, such as a car navigation system, an audio system, a speaker, a display, a television, and a radio; and one or more ECUs that control these devices. The information service section 59 provides various pieces of information/services (for example, multimedia information/multimedia service) to an occupant of the vehicle 40, using information acquired from an external apparatus via the communication module 60 and the like.

The information service section 59 may include an input device (for example, a keyboard, a mouse, a microphone, a switch, a button, a sensor, a touch panel, and the like) for receiving input from the outside, or may include an output device (for example, a display, a speaker, an LED lamp, a touch panel, and the like) for implementing output to the outside.

A driving assistance system section 64 includes: various devices for providing functions for preventing an accident and reducing a driver's driving load, such as a millimeter wave radar, Light Detection and Ranging (LiDAR), a camera, a positioning locator (for example, a Global Navigation Satellite System (GNSS) and the like), map information (for example, a high definition (HD) map, an autonomous vehicle (AV) map, and the like), a gyro system (for example, an inertial measurement apparatus (inertial measurement unit (IMU)), an inertial navigation apparatus (inertial navigation system (INS)), and the like), an artificial intelligence (AI) chip, and an AI processor; and one or more ECUs that control these devices. The driving assistance system section 64 transmits and receives various pieces of information via the communication module 60, and implements a driving assistance function or an autonomous driving function.

The communication module 60 can communicate with the microprocessor 61 and the constituent elements of the vehicle 40 via the communication port 63. For example, the communication module 60 transmits and receives data (information), via the communication port 63, to and from the driving section 41, the steering section 42, the accelerator pedal 43, the brake pedal 44, the shift lever 45, the right and left front wheels 46, the right and left rear wheels 47, the axle 48, the microprocessor 61 and the memory (ROM, RAM) 62 in the electronic control section 49, and the various sensors 50 to 58, which are included in the vehicle 40.

The communication module 60 is a communication device that can be controlled by the microprocessor 61 of the electronic control section 49 and that can perform communication with an external apparatus. For example, the communication module 60 performs transmission and reception of various pieces of information to and from the external apparatus via radio communication. The communication module 60 may be either inside or outside the electronic control section 49. The external apparatus may be, for example, the base station 10, the user terminal 20, or the like described above. The communication module 60 may be, for example, at least one of the base station 10 and the user terminal 20 described above (may function as at least one of the base station 10 and the user terminal 20).

The communication module 60 may transmit at least one of signals input from the various sensors 50 to 58 to the electronic control section 49, information obtained based on the signals, and information based on an input from the outside (a user) obtained via the information service section 59, to the external apparatus via radio communication. The electronic control section 49, the various sensors 50 to 58, the information service section 59, and the like may be referred to as input sections that receive input. For example, the PUSCH transmitted by the communication module 60 may include information based on the input.

The communication module 60 receives various pieces of information (traffic information, signal information, inter-vehicle distance information, and the like) transmitted from the external apparatus, and displays the received information on the information service section 59 included in the vehicle. The information service section 59 may be referred to as an output section that outputs information (for example, outputs information to devices, such as a display and a speaker, based on the PDSCH received by the communication module 60 (or data/information decoded from the PDSCH)).

The communication module 60 stores the various pieces of information received from the external apparatus in the memory 62 that can be used by the microprocessor 61. Based on the pieces of information stored in the memory 62, the microprocessor 61 may control the driving section 41, the steering section 42, the accelerator pedal 43, the brake pedal 44, the shift lever 45, the right and left front wheels 46, the right and left rear wheels 47, the axle 48, the various sensors 50 to 58, and the like provided in the vehicle 40.

Furthermore, the base station in the present disclosure may be interpreted as a user terminal. For example, each aspect/embodiment of the present disclosure may be applied to the structure that replaces a communication between a base station and a user terminal with a communication between a plurality of user terminals (for example, which may be referred to as "Device-to-Device (D2D)", "Vehicle-to-Everything (V2X)", and the like). In this case, user terminals 20 may have the functions of the base stations 10 described above. The words such as "uplink" and "downlink" may be interpreted as the words corresponding to the terminal-to-terminal communication (for example, "sidelink"). For example, an uplink channel, a downlink channel and so on may be interpreted as a sidelink channel.

Likewise, the user terminal in the present disclosure may be interpreted as a base station. In this case, the base station 10 may have the functions of the user terminal 20 described above.

Operations which have been described in the present disclosure to be performed by a base station may, in some cases, be performed by an upper node of the base station. In a network including one or a plurality of network nodes with base stations, it is clear that various operations that are performed to communicate with terminals can be performed by base stations, one or more network nodes (for example, Mobility Management Entities (MMEs), Serving-Gateways (S-GWs), and so on may be possible, but these are not limiting) other than base stations, or combinations of these.

Each aspect/embodiment described in the present disclosure may be used independently, may be used in combination, or may be switched depending on the mode of implementation. The order of processes, sequences, flowcharts, and so on that have been used to describe the aspects/embodiments in the present disclosure may be re-ordered as long as inconsistencies do not arise. For example, although various methods have been illustrated in the present disclosure with various components of steps in exemplary orders, the specific orders that are illustrated herein are by no means limiting.

The aspects/embodiments illustrated in the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), 6th generation mobile communication system (6G), xth generation mobile communication system (xG (where x is, for example, an integer or a decimal)), Future Radio Access (FRA), New-Radio Access Technology (RAT), New Radio (NR), New radio access (NX), Future generation radio access (FX), Global System for Mobile communications (GSM (registered trademark)), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods and next-generation systems that are enhanced, modified, created, or defined based on these. A plurality of systems may be combined (for example, a combination of LTE or LTE-A and 5G, and the like) for application.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first", "second", and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

The term "deciding (determining)" as in the present disclosure herein may encompass a wide variety of actions. For example, "deciding (determining)" may be interpreted to mean making "decisions(determinations)" about judging, calculating, computing, processing, deriving, investigating, looking up, search and inquiry (for example, searching a table, a database, or some other data structures), ascertaining, and so on.

Furthermore, "deciding (determining)" may be interpreted to mean making "decisions(determinations)" about receiving (for example, receiving information), transmitting (for example, transmitting information), input, output, accessing (for example, accessing data in a memory), and so on.

In addition, "deciding (determining)" as used herein may be interpreted to mean making "decisions(determinations)" about resolving, selecting, choosing, establishing, comparing, and so on. In other words, "deciding (determining)" may be interpreted to mean making "decisions (determinations)" about some action. In the present disclosure, "decide/deciding (determine/determining)" may be interchangeably interpreted as the above-described actions.

In the present disclosure, "decide/deciding (determine/determining)" may be used interchangeably with "assume/assuming", "expect/expecting", "consider/considering", and the like. Note that, in the present disclosure, "not expect to" may be used interchangeably with "expect not to".

In the present disclosure, "expect" may be used interchangeably with "be expected". For example, "expect(s) ..." ("..." may be expressed using, for example, a that-clause, a to-infinitive, or the like) may be used interchangeably with "be expected ...". "Does not expect ..." may be used interchangeably with "be not expected ...". Furthermore, "an apparatus A is not expected ..." may be used interchangeably with "an apparatus B other than the apparatus A does not expect ... for the apparatus A" (for example, when the apparatus A is a UE, the apparatus B may be a base station).

"The maximum transmit power" described in the present disclosure may mean a maximum value of the transmit power, may mean the nominal maximum transmit power (the nominal UE maximum transmit power), or may mean the rated maximum transmit power (the rated UE maximum transmit power).

The terms "connected", "coupled", or any variation of these terms as used in the present disclosure mean any direct or indirect connections or coupling between two or more elements, and may include the presence of one or more intermediate elements between two elements that are "connected" or "coupled" to each other. The coupling or connection between the elements may be physical, logical, or a combination thereof. For example, "connection" may be interpreted as "access".

In the present disclosure, when two elements are connected, the two elements may be considered "connected" or "coupled" to each other by using one or more electrical wires, cables and printed electrical connections, and, as some non-limiting and non-inclusive examples, by using electromagnetic energy having wavelengths in radio frequency regions, microwave regions, (both visible and invisible) optical regions, or the like.

In the present disclosure, the phrase "A and B are different" may mean that "A and B are different from each other". It should be noted that the phrase may mean that "A and B are each different from C". The terms "separate", "coupled", and so on may be interpreted similarly to "different".

In the case where the terms "include", "including", and variations thereof are used in the present disclosure, these terms are intended to be comprehensive, in a manner similar to the term "comprising". Furthermore, the term "or" used in the present disclosure is not intended to be an "exclusive or".

For example, in the present disclosure, where an article such as "a", "an", and "the" is added by translation, the present disclosure may include that a noun after the article is in a plural form.

In the present disclosure, "equal to or less than", "less than", "equal to or more than", "more than", "equal to", and the like may be used interchangeably. In the present disclosure, words such as "good", "bad", "large", "small", "high", "low", "early", "late", "wide", "narrow", and the like may be used interchangeably irrespective of positive degree, comparative degree, and superlative degree. In the present disclosure, expressions obtained by adding "i-th" (i is any integer) to words such as "good", "bad", "large", "small", "high", "low", "early", "late", "wide", "narrow", and the like may be used interchangeably irrespective of positive degree, comparative degree, and superlative degree (for example, "best" may be used interchangeably with "i-th best", and vice versa).

In the present disclosure, "of", "for", "regarding", "related to", "associated with", and the like may be used interchangeably.

In the present disclosure, "when A, B", "if A, (then) B", "B upon A", "B in response to A", "B based on A", "B during/while A", "B before A", "B (at the same time as)/on A", "B after A", "B since A", "B until A", and the like may be used interchangeably. Note that A and B here may be replaced with appropriate expressions such as nouns, dynamic nouns, and normal sentences, as appropriate, depending on the context. The time difference between A and B may be substantially 0 (immediately after or immediately before). A time offset may be applied to the time at which A occurs. For example, "A" may be used interchangeably with "before/after the time offset at which A occurs". The time offset (for example, one or more symbols/slots) may be defined in advance or may be specified by the UE based on the notified information.

In the present disclosure, timing, time point, time, time instance, any time unit (e.g., slot, sub-slot, symbol, subframe), period, occasion, a resource, or the like may be used interchangeably.

Now, although the invention according to the present disclosure has been described in detail above, it is apparent to a person skilled in the art that the invention according to the present disclosure is by no means limited to the embodiments described in the present disclosure. The description of the present disclosure is provided only for the purpose of explaining examples, and should by no means be construed to limit the invention according to the present disclosure in any way.

## Claims

1. A terminal comprising:
a receiving section that receives sequence-based first downlink control information (DCI) not using a demodulation reference signal (DMRS); and
a control section that controls reception of second DCI using the DMRS, based on the first DCI.

2. The terminal according to claim 1, wherein
the first DCI includes first information, and the second DCI includes second information not provided in the first information.

3. The terminal according to claim 1, wherein
the first DCI includes information related to a resource of the second DCI.

4. The terminal according to claim 1, wherein
the receiving section acquires the first DCI, based on a base sequence associated with a search space set for the first DCI.

5. A radio communication method for a terminal, the radio communication method comprising:
receiving sequence-based first downlink control information (DCI) not using a demodulation reference signal (DMRS); and
controlling reception of second DCI using the DMRS, based on the first DCI.

6. A base station comprising:
a transmitting section that transmits sequence-based first downlink control information (DCI) not using a demodulation reference signal (DMRS); and
a control section that controls transmission of second DCI using the DMRS, based on the first DCI.
